(19) Europäisches Patentamt
European Patent Office
Office européen des brevets

(11) **EP 0 938 831 B1**

(12) **EUROPÄISCHE PATENTSCHRIFT**

(45) Veröffentlichungstag und Bekanntmachung des Hinweises auf die Patenterteilung:
**19.12.2001   Patentblatt 2001/51**

(21) Anmeldenummer: **97910410.6**

(22) Anmeldetag: **02.10.1997**

(51) Int Cl.$^7$: **H04S 1/00**, H04R 29/00

(86) Internationale Anmeldenummer:
**PCT/EP97/05446**

(87) Internationale Veröffentlichungsnummer:
**WO 98/23130 (28.05.1998 Gazette 1998/21)**

(54) **GEHÖRANGEPASSTE QUALITÄTSBEURTEILUNG VON AUDIOSIGNALEN**

HEARING-ADAPTED QUALITY ASSESSMENT OF AUDIO SIGNALS

EVALUATION DE LA QUALITE, A ADAPTATION AUDITIVE, DE SIGNAUX AUDIO

(84) Benannte Vertragsstaaten:
**AT BE CH DE DK ES FI FR GB GR IE IT LI LU MC NL PT SE**

(30) Priorität: **15.11.1996  DE 19647399**

(43) Veröffentlichungstag der Anmeldung:
**01.09.1999   Patentblatt 1999/35**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
- **SEITZER, Dieter**
  **D-91054 Erlangen (DE)**
- **SPORER, Thomas**
  **D-90766 Fürth (DE)**

(74) Vertreter: **Schoppe, Fritz, Dipl.-Ing.**
**Schoppe, Zimmermann & Stöckeler**
**Patentanwälte Postfach 71 08 67**
**81458 München (DE)**

(56) Entgegenhaltungen:
**EP-A- 0 473 367     EP-A- 0 553 538**
**DE-A- 4 222 050     DE-A- 4 345 171**
**DE-A- 4 437 287**

EP 0 938 831 B1

**Beschreibung**

Die vorliegende Erfindung bezieht sich auf die Audio-Codierung bzw. -Decodierung und insbesondere auf ein Verfahren und eine Vorrichtung zur gehörangepaßten Qualitätsbeurteilung von Audiosignalen.

Nachdem gehörangepaßte digitale Codierverfahren seit einigen Jahren standardisiert sind (Kh. Brandenburg und G. Stoll, The iso/mpeg-audio codec: A generic standard for coding of high quality digital audio, *92nd AES-Convention*, Wien, 1992, Preprint 3336), werden dieselben in steigendem Maße eingesetzt. Beispiele hierfür sind die digitale Kompaktkassette (DCC; DCC = Digital Compact Cassette), die Minidisk, der digitale terrestrische Rundfunk (DAB; DAB = Digital Audio Broadcasting) und die digitale Videodisk (DVD). Die von analogen Übertragungen bekannten Störungen treten bei der digitalen uncodierten Tonsignalübertragung in der Regel nicht mehr auf. Die Meßtechnik kann sich auf den Übergang von analog zu digital und umgekehrt beschränken, falls keine Codierung der Tonsignale durchgeführt wird.

Bei der Codierung mittels gehörangepaßter Codierverfahren können jedoch hörbare Kunstprodukte oder Artefakte auftreten, die in der analogen Tonsignalverarbeitung nicht aufgetreten sind.

Bekannte Meßwerte für Verzerrungen, wie z.B. der Klirrfaktor oder der Signal-Rausch-Abstand, sind für gehörangepaßte Codierverfahren nicht einsetzbar. Viele gehörangepaßt codierte Musiksignale weisen einen Signal-Rausch-Abstand von unter 15 dB auf, ohne daß hörbare Unterschiede zum uncodierten Originalsignal wahrnehmbar werden. Umgekehrt kann ein Signal-Rausch-Abstand von mehr als 40 dB bereits zu deutlich hörbaren Störungen führen.

In den letzten Jahren wurden verschiedene gehörangepaßte Meßverfahren vorgestellt, von denen das NMR-Verfahren (NMR = Noise to Mask Ratio) erwähnt sei (Kh. Brandenburg und Th. Sporer. "NMR" und "Masking Flag": Evaluation of quality using perceptual criteria. *In Proceedings of the 11th International Conference of the AES*, Portland, 1992).

Bei einer Implementation des NMR-Verfahrens wird jeweils eine diskrete Fourier-Transformation der Länge 1024 unter Verwendung eines Hann-Fensters mit einer Fortschrittsgeschwindigkeit von 512 Abtastwerten für ein Originalsignal und für ein Differenzsignal zwischen dem Originalsignal und einem verarbeiteten Signal berechnet. Die daraus erhaltenen Spektralkoeffizienten werden in Frequenzbändern, deren Breite näherungsweise den von Zwicker in E. Zwicker, Psychoakustik, Springer-Verlag, Berlin Heidelberg New York, 1982, vorgeschlagenen Frequenzgruppen entspricht, zusammengefaßt, wonach die Energiedichte jedes Frequenzbandes bestimmt wird. Aus den Energiedichten des Originalsignals wird unter Berücksichtigung der Verdeckung innerhalb der jeweiligen Frequenzgruppe, der Verdeckung zwischen den Frequenzgruppen und der Nachverdeckung für jedes Frequenzband eine aktuelle Maskierungs- oder Verdeckungsschwelle bestimmt, mit der die Energiedichte des Differenzsignals verglichen wird. Die Ruhehörschwelle des menschlichen Ohrs wird nicht vollständig berücksichtigt, da die Eingangssignale des Meßverfahrens nicht mit festen Abhörlautstärken identifiziert werden können, da üblicherweise ein Hörer von Audiosignalen einen Zugriff auf die Lautstärke des Musik- oder Tonstücks hat, das er hören möchte.

Es hat sich herausgestellt, daß das NMR-Verfahren beispielsweise bei einer typischen Abtastrate von 44,1 kHz eine Frequenzauflösung von ca. 43 Hz und eine Zeitauflösung von ca. 23 ms besitzt. Die Frequenzauflösung ist bei niedrigen Frequenzen zu gering, während die Zeitauflösung bei hohen Frequenzen zu gering ist. Trotzdem reagiert das NMR-Verfahren auf viele Zeiteffekte gut. Ist eine Folge von Anschlägen, wie z.B. Trommelschlägen, niedrig genug, dann hat der Block vor dem Anschlag noch eine sehr kleine Energie, wodurch ein eventuell auftretendes Vorecho genau erkannt werden kann. Die Fortschrittsgeschwindigkeit von 11,6 ms für das Analysefenster ermöglicht es, viele Vorechos zu erkennen. Liegt das Analysefenster allerdings ungünstig, so kann ein Vorecho unerkannt bleiben.

Der Unterschied zwischen einer Verdeckung durch tonale Signale und durch Rauschen wird bei dem NMR-Verfahren nicht berücksichtigt. Die verwendeten Verdeckungskurven sind aus subjektiven Hörtests gewonnene Erfahrungswerte. Die Frequenzgruppen sitzen dabei an festen Positionen innerhalb des Frequenzspektrums, wohingegen das Ohr die Frequenzgruppen dynamisch um einzelne besonders hervorstechende Schallereignisse im Spektrum bildet. Richtiger wäre daher eine dynamische Anordnung um die Energiedichteschwerpunkte. Durch die Breite der festen Frequenzgruppen ist es nicht möglich, zu unterscheiden, ob beispielsweise ein Sinus-Signal in der Mitte oder an einer Flanke einer Frequenzgruppe liegt. Die Verdeckungs- oder Maskierungskurve geht daher vom kritischsten Fall, d.h. der geringsten Verdeckung, aus. Das NMR-Verfahren zeigt deshalb manchmal Störungen an, die von einem Menschen nicht gehört werden können.

Die bereits erwähnte geringe Frequenzauflösung von lediglich 43 Hz stellt insbesondere im unteren Frequenzbereich eine Grenze für eine gehörangepaßte Qualitätsbeurteilung von Audiosignalen mittels des NMR-Verfahrens dar. Dies wirkt sich besonders nachteilig bei der Beurteilung von tiefen Sprachsignalen, wie sie beispielsweise ein männlicher Sprecher erzeugt, oder von Tönen sehr tiefer Instrumente, wie z.B. eine Baßposaune, aus.

Zum besseren Verständnis der vorliegenden Erfindung werden im nachfolgenden einige wichtige psychoakustische und kognitive Grundlagen für die gehörangepaßte Qualitätsbeurteilung von Audiosignalen genannt. Der für die gehörangepaßte Codierung und Meßtechnik wichtigste Begriff ist die Verdeckung, welche in Anlehnung an den englischen Begriff "masking" auch oft Maskierung genannt wird. Ein leises einzeln auftretendes wahrnehmbares Schallereignis wird durch ein lauteres Schallereignis verdeckt, d.h. es wird in Anwesenheit des zweiten, lauteren Schallereignisses nicht mehr wahrgenommen. Die Verdeckung ist sowohl von der zeitlichen als auch der spektralen Struktur des Maskierers (d.h. des verdeckenden Signals) und dem verdeckten Signal abhängig.

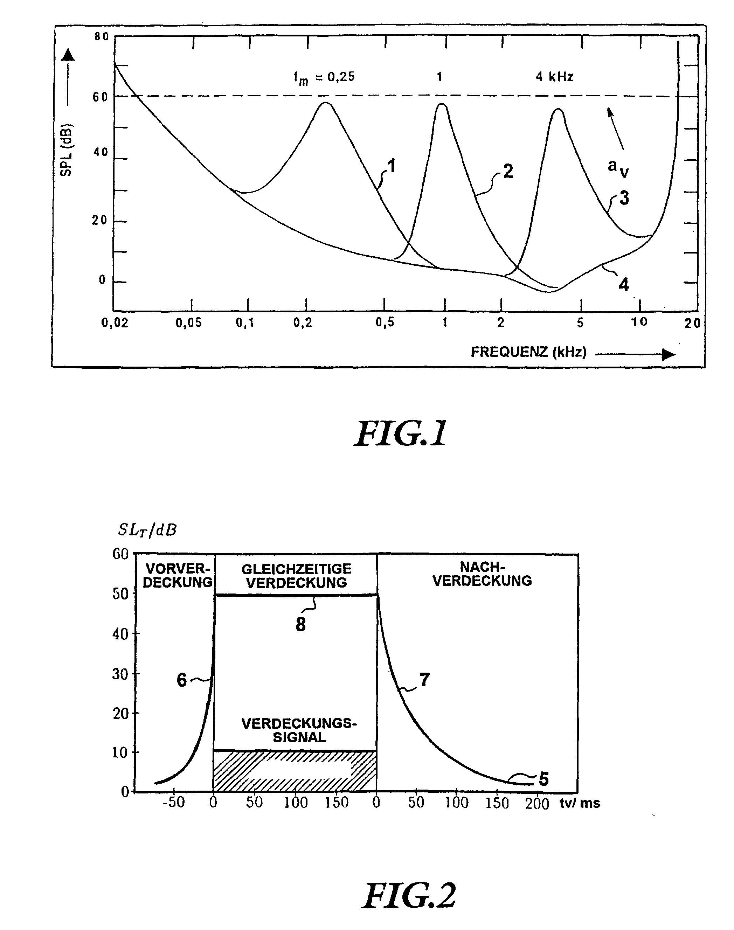

Fig. 1 soll die Verdeckung von Tönen durch Schmalbandrauschsignale 1, 2, 3 bei 250 Hz, 1.000 Hz und 4.000 Hz und einem Schalldruckpegel von 60 dB veranschaulichen. Fig. 1 ist aus E. Zwicker und H. Fastl, Zur Abhängigkeit der Nachverdeckung von Störimpulsdauer, *Acustica*, Bd. 26, S. 78 - 82, 1972, entnommen.

Das menschliche Ohr kann dabei als eine Filterbank bestehend aus einer großen Zahl einander überlappender Bandpaßfilter betrachtet werden. Die Verteilung dieser Filter über der Frequenz ist nicht konstant. Insbesondere ist bei tiefen Frequenzen die Frequenzauflösung deutlich besser als bei hohen Frequenzen. Betrachtet man den kleinsten wahrnehmbaren Frequenzunterschied, so beträgt dieser unterhalb von ca. 500 Hz etwa 3 Hz und steigt oberhalb von 500 Hz proportional zur Frequenz oder Mittenfrequenz der Frequenzgruppen an. Ordnet man die kleinsten wahrnehmbaren Unterschiede nebeneinander auf der Frequenzskala an, so erhält man 640 wahrnehmbare Stufen. Eine Frequenzskala, die der menschlichen Frequenzempfindung angepaßt ist, stellt die Bark-Skala dar. Sie unterteilt den gesamten Hörbereich bis ca 15,5 kHz in 24 Abschnitte.

Aufgrund der Überlappung von Filtern endlicher Steilheit werden leise Tonsignale in der Nachbarschaft von lauten Tonsignalen maskiert. So werden in Fig. 1 alle unterhalb der eingezeichneten Schmalbandrauschkurven 1, 2, 3 vorhandenen Sinustonsignale, welche im Spektrum als einzelne Linie dargestellt werden, verdeckt, wodurch sie nicht hörbar sind.

Die Flankensteilheit der einzelnen Verdeckungsfilter der modellmäßig angenommenen Filterbank im menschlichen Ohr ist ferner vom Schalldruckpegel des gehörten Signals und in geringem Maße von der Mittenfrequenz des jeweiligen Bandfilters abhängig. Die maximale Verdeckung hängt von der Struktur des Maskierers ab und beträgt bei der Verdeckung durch Rauschen ca. -5 dB. Bei der Verdeckung durch Sinustöne ist die maximale Verdeckung deutlich geringer und beträgt abhängig von der Mittenfrequenz -14 bis -35 dB (siehe in M.R. Schroeder, B.S. Atal und J.L. Hall, Optimizing digital speech coders by exploiting masking properties of the human ear, *The Journal of the Acoustic Society of America*, Bd. 66 (Nr. 6), S. 1647 - 1652, Dezember 1979).

Der zweite wichtige Effekt ist die Verdeckung im Zeitbereich, zu deren Verständnis Fig. 2 beitragen soll. Unmittelbar nach, aber auch unmittelbar vor einem lauten Schallereignis werden leisere Schallereignisse nicht wahrgenommen. Die zeitliche Verdeckung ist stark von der Struktur und Dauer des Maskierers abhängig (siehe H. Fastl, Mithörschwellen als Maß für das zeitliche und spektrale Auflösungsvermögen des Gehörs. Dissertation, Fakultät für Maschinenwesen und Elektrotechnik der Technischen Universität München, München, Mai 1974). Die Nachverdeckung kann sich insbesondere bis zu 100 ms erstrecken. Die größte Empfindlichkeit und damit die kürzeste Verdeckung tritt bei der Maskierung von Rauschen durch Gauß-Impulse auf. Hierbei betragen die Vor- und die Nachverdeckung lediglich etwa 2 ms.

Bei genügend großem Abstand vom Maskierer bzw. von 4 in Fig. 1 gehen die Maskierungskurven in eine Ruhehörschwelle 5 über. Am Beginn und Ende eines Verdeckungssignals gehen die Maskierungskurven der Vorverdeckung 6 bzw. der Nachverdeckung 7 in eine gleichzeitige Verdeckung 8 über. Fig. 2 ist im wesentlichen aus E. Zwicker, Psychoakustik, Springer-Verlag, Berlin Heidelberg New York, 1982, entnommen.

Die Vorverdeckung wird durch die unterschiedlich schnelle Verarbeitung von Signalen auf dem Weg vom Ohr zum Gehirn bzw. im Gehirn erklärt. Große Reize, d.h. laute Schallereignisse oder Schallereignisse mit einem hohen Schalldruckpegel (SPL; SPL = Sound Pressure Level), werden schneller weitergegeben als kleine. Ein lautes Schallereignis kann deshalb ein zeitlich davorliegendes leiseres Schallereignis gewissermaßen "überholen" und damit verdecken.

Die Nachverdeckung entspricht einer "Erholungszeit" der Schallrezeptoren und der Reizleitung, wobei insbesondere der Abbau von Botenstoffen an den Nervensynapsen zu nennen wäre.

Das Verdeckungsmaß oder der Grad der Verdeckung hängt von der zeitlichen und spektralen Struktur des Maskierers, d.h. des maskierenden Signals, ab. Die Vorverdeckung ist bei impulsartigen Maskierern am kürzesten (etwa 1,5 ms) und bei Rauschsignalen deutlich länger (bis zu 15 ms). Die Nachverdeckung erreicht nach 100 ms die Ruhehörschwelle. Über die genaue Form der Nachverdeckungskurve finden sich unterschiedliche Aussagen in der Literatur. So kann im Einzelfall die Nachverdeckung bei Rauschsignalen zwischen 15 bis 40 ms differieren. Die oben angegebenen Werte stellen jeweils Minimalwerte für Rauschen dar. Neue Untersuchungen mit GaußImpulsen als Maskierer zeigen, daß für solche Signale auch die Nachverdeckung im Bereich von 1,5 ms liegt (J. Spille, Messung der Vor- und Nachverdeckung bei Impulsen unter kritischen Bedingungen, Internal Report, Thomson Consumer Electronics, Hannover, 1992). Werden sowohl Maskierer als auch Störsignale mittels eines Tiefpasses bandbegrenzt, so verlängern sich sowohl die Vor- als auch die Nachverdeckung.

Die zeitliche Verdeckung spielt bei der Beurteilung von Audiocodierverfahren eine wichtige Rolle. Wird, wie es meistens der Fall ist, blockweise gearbeitet, und befinden sich Anschläge im Block, so entstehen unter Umständen Störungen vor dem Anschlag, die über dem Nutzsignalpegel liegen. Diese Störungen werden eventuell durch eine Vorverdeckung maskiert. Ist diese Störung jedoch nicht maskiert, so nennt man den entstehenden Effekt "Vorecho". Vorechos werden in der Regel nicht getrennt vom Anschlag wahrgenommen, sondern als eine tonmäßige Verfärbung des Anschlags.

Die Ruhehörschwelle (4 in Fig. 1) ergibt sich durch den Frequenzgang von Außen- und Mittelohr und durch die Überlagerung der ins Innenohr gelangten Schallsignale mit dem beispielsweise durch die Blutströmung verursachten Grundrauschen. Dieses Grundrauschen und die im Frequenzbereich nicht konstante Ruhehörschwelle verdecken dadurch sehr leise Schallereignisse. Aus Fig. 1 ist insbesondere zu sehen, daß ein gutes Gehör etwa einen Frequenzbereich von 20 Hz bis 18 kHz erfassen kann.

Die subjektiv empfundene Lautheit eines Signals hängt sehr stark von seiner spektralen und zeitlichen Zusammensetzung ab. Anteile eines Signals können andere Anteile desselben Signals verdecken, derart, daß diese nicht mehr zum Höreindruck beitragen. Signale nahe der Mithörschwelle (d.h. gerade eben noch wahrnehmbare Signale) werden als leiser empfunden als es ihrem tatsächlichen Schalldruckpegel entspricht. Dieser Effekt wird als "Drosselung" bezeichnet (E. Zwicker und R. Feldtkeller, *Das Ohr als Nachrichtenempfänger*, Hirzel-Verlag, Stuttgart, 1967).

Ferner spielen kognitive Effekte bei der Beurteilung von Audiosignalen eine Rolle. Insbesondere hat sich eine fünfstufige sog. "Impairmentskala" (Impairment = Beeinträchtigung) verbreitet. Die Aufgabe von menschlichen Testpersonen ist es, in einem Doppelblindtest Bewertungen für zwei Signale abzugeben, von denen eines das Originalsignal ist, das nicht codiert und decodiert worden ist, während das andere Signal ein nach einer Codierung und darauffolgenden Decodierung gewonnenes Signal ist. Bei dem Hörtest existieren drei Stimuli A, B, C, wobei das Signal A immer das Referenzsignal ist. Eine Person, die den Hörtest durchführt, vergleicht immer die Signale B und C mit A. Das uncodierte Signal wird dabei als Referenzsignal bezeichnet, während das durch Codierung und Decodierung von dem Referenzsignal abgeleitete Signal als Testsignal bezeichnet wird. Bei der Bewertung von deutlich hörbaren Störungen spielen also nicht nur psychoakustische Effekte sondern auch kognitive oder subjektive Effekte eine Rolle.

Bei der Beurteilung von Audiosignalen durch menschliche Hörer haben kognitive Effekte erhebliche Auswirkungen auf die Bewertung mittels der Impairmentskala. Einzelne sehr starke Störungen werden von vielen Testpersonen vielfach als weniger störend als dauerhaft vorhandene Störungen empfunden. Ab einer bestimmten Anzahl solcher starken Störungen dominieren sie allerdings doch den Qualitätseindruck. Systematische Untersuchungen hierzu sind aus der Literatur nicht bekannt.

Obwohl sich bei psychoakustischen Test die Wahrnehmungsschwellen verschiedener Hörer kaum unterscheiden, werden verschiedene Artefakte von verschiedenen Testpersonen als unterschiedlich schwerwiegend empfunden. Während manche Testpersonen Beschränkungen der Bandbreite als weniger störend empfinden als Rauschmodulationen bei hohen Frequenzen, ist dies bei anderen Testpersonen genau umgekehrt.

Die Bewertungsskalen verschiedener Testpersonen unterscheiden sich deutlich. Viele Hörer tendieren dazu, deutlich hörbare Störungen mit der Note 1 ("sehr störend") zu bewerten, während sie mittlere Noten kaum vergeben. Andere Hörer vergeben häufig mittlere Noten (Thomas Sporer, Evaluating small impairments with the mean opinion scale - reliable or just a guess? In *101nd AES-Convention,* Los Angeles, 1996, Preprint).

Die DE 44 37 287 C2 offenbart ein Verfahren zur Messung der Erhaltung stereophoner Audiosignale und Verfahren zur Erkennung gemeinsam codierter stereophoner Audiosignale. Ein zu testendes Signal mit zwei Stereokanälen wird durch Codierung und anschließende Decodierung eines Referenzsignals gebildet. Sowohl das zu testende Signal als auch das Referenzsignal werden in den Frequenzbereich transformiert. Für jedes Teilband des Referenzsignals und für jedes Teilband des zu testenden Signals werden Signalkenngrößen für das Referenzsignal und für das zu testende Signal gebildet. Die jeweils zu demselben Teilband gehörenden Signalkenngrößen werden miteinander verglichen. Aus diesem Vergleich wird auf die Erhaltung stereophoner Audiosignaleigenschaften oder die Störung des Stereoklangbilds bei der verwendeten Codierungstechnik geschlossen. Subjektive Einflüsse auf das Referenzsignal und auf das zu testende Signal aufgrund der Übertragungseigenschaften des menschlichen Ohrs werden in dieser Schrift nicht berücksichtigt.

Die DE 4345171 zeigt ein Verfahren zum Bestimmen der zu wählenden Codierungsart für die Codierung von wenigstens zwei Signalen. Ein Signal, das zwei Stereokanäle aufweist, wird mittels Intensity-Stereo-Codierung codiert und wieder decodiert, um mit dem ursprünglichen Stereosignal verglichen zu werden. Die Intensity-Stereo-Codierung soll für die eigentliche Audiocodierung des Stereosignals verwendet werden, wenn der linke und der rechte Kanal eine hohe Ähnlichkeit besitzen. Das codierte/decodierte Stereosignal und das ursprüngliche Stereosignal werden durch ein Transformationsverfahren mit ungleicher Zeit- und Frequenzauflösung vom Zeitbereich in den Frequenzbereich transformiert. Dieses Transformationsverfahren umfaßt eine Hybrid/Polyphasenfilterbank, durch die gleichartige Spektrallinien beispielsweise mittels einer FFT oder MDCT erzeugt werden. Durch Wählen einer ab einer bestimmten Grenzfrequenz ansteigenden Skalenfaktorbandbreite soll die Frequenzgruppenbreite und die zugehörige Zeitauflösung des menschlichen Hörsinns simuliert werden Anschließend werden die Kurzzeitenergien in den jeweiligen Frequenzgruppenbändern durch Quadrierung und Summation sowohl des ursprünglichen Stereosignals als auch des codierten/decodierten Stereosignals gebildet. Die so gewonnenen Kurzzeitenergiewerte werden mit der psychoakustischen Mithörschwelle bewertet, um nur die hörbaren Kurzzeitenergiewerte weiter zu berücksichtigen, um die psychoakustischen Verdeckungseffekte bei der Beurteilung, ob eine Intensity-Stereo-Codierung sinnvoll ist, zu berücksichtigen. Diese Bewertung der Kurzzeitenergiewerte der Frequenzgruppenbänder kann ferner um eine Modellierung des menschlichen Innenohrs erweitert werden, um die Nichtlinearitäten des menschlichen Innenohrs ebenfalls mit einzubeziehen.

Die Aufgabe der vorliegenden Erfindung besteht darin, ein Verfahren und eine Vorrichtung für eine gehörangepaßte Qualitätsbeurteilung von Audiosignalen zu schaffen, welche durch eine verbesserte zeitliche Auflösung eine bessere Modellierung der Vorgänge im menschlichen Gehör erreichen, um von subjektiven Einflüssen unabhängiger zu werden.

Diese Aufgabe wird durch ein Verfahren gemäß Anspruch 1 und durch eine Vorrichtung gemäß Anspruch 18 oder 23 gelöst.

Der Erfindung liegt die Erkenntnis zugrunde, alle nichtlinearen Gehöreffekte auf das Referenzsignal und das Testsignal gleichermaßen zu simulieren, und einen Vergleich zur Qualitätsbeurteilung des Testsignals sozusagen hinter dem Ohr, d.h. am Übergang der Gehörschnecke zum Gehörnerv, durchzuführen. Die gehörangepaßte Qualitätsbeurteilung von Audiosignalen arbeitet also mittels eines Vergleichs in dem Gehörschneckenbereich ("Cochlear Domain"). Es werden also die Erregungen im Ohr durch das Testsignal bzw. durch das Referenzsignal verglichen. Dazu werden sowohl das Audioreferenzsignal als auch das Audiotestsignal durch eine Filterbank in ihre spektralen Zusammensetzungen zerlegt. Durch eine große Anzahl von Filtern, welche sich frequenzmäßig überlappen, wird eine ausreichende sowohl zeitliche aus auch frequenzmäßige Auflösung sichergestellt. Die Gehöreffekte des Ohrs werden derart berücksichtigt, daß jedes einzelne Filter eine eigene Form aufweist, die anhand der Außen- und Mittelohr-Übertragungsfunktion und des internen Rauschens im Ohr, anhand der Mittenfrequenz $f_m$ eines Filters und anhand des Schalldruckpegels L des zu beurteilenden Audiosignals bestimmt wird. Zur Reduzierung der Komplexität und des Rechenaufwands wird für jede Filterübertragungsfunktion eine Betrachtung des schlimmstmöglichen Falles durchgeführt, wodurch eine sog. Worst-Case-Erregungskurve für verschiedene Schalldruckpegel bei der jeweiligen Mittenfrequenz jedes Filters für dasselbe bestimmt wird.

Zur weiteren Reduzierung des Rechenaufwands werden Teile der Filterbank mit verringerter Abtastrate berechnet, wodurch der zu verarbeitende Datenstrom entscheidend reduziert wird. Aus Kompatibilitätsgründen mit der schnellen Fourier-Transformation oder Abwandlungen derselben, welche durch die Filterbank ausgeführt wird, werden lediglich Abtastraten verwendet, die sich durch den Quotienten aus der Ursprungsabtastrate und einer Potenz von 2 (d.h. das 1/2-, das 1/4-, das 1/8-, das 1/16-, das 1/32-fache der ursprünglichen Abtast- bzw. Datenrate) ergeben. So wird immer eine einheitliche Fensterlänge der verschiedenen Filtergruppen, die mit einer gleichen Abtastfrequenz arbeiten, erreicht.

Schließlich ist jedem Filter der Filterbank eine Modellierungseinrichtung zum Modellieren der Vor- und Nachverdeckung nachgeschaltet. Die Modellierung der Vor- und Nachverdeckung verringert die erforderliche Bandbreite so weit, daß je nach Filter eine weitere Reduktion der Abtastrate, d.h. eine Unterabtastung, möglich ist. Die resultierende Abtastrate in allen Filtern entspricht somit bei einem bevorzugten Ausführungsbeispiel der Erfindung einem zweiunddreißigstel der Eingangsdatenrate. Diese gemeinsame Abtastrate für alle Filterbänke ist für die weitere Ver-arbeitung äußerst vorteilhaft und nötig.

Nach der Filterbank erfolgt die Bestimmung der Verzögerung der Ausgangssignale der einzelnen Filter, um eventuell vorhandene zeitliche Unsynchronitäten bei der Berechnung des Audiotestsignals bzw. des Audioreferenzsignals auszugleichen.

Der Vergleich des Audioreferenzsignals mit dem Audiotestsignal wird, wie es erwähnt wurde, gewissermaßen "hinter der Gehörschnecke" durchgeführt. Die Pegeldifferenzen zwischen einem Ausgangssignal eines Filters der Filterbank für das Audiotestsignal und dem Ausgangssignal des entsprechenden Filters der Filterbank für das Audioreferenzsignal wird erfaßt und in eine Detektionswahrscheinlichkeit abgebildet, die berücksichtigt, ob eine Pegeldifferenz ausreichend groß ist, um von dem Gehirn als solche erkannt zu werden. Die gehörangepaßte Qualitätsbeurteilung gemäß der vorliegenden Erfindung erlaubt eine gemeinschaftliche Auswertung von Pegeldifferenzen mehrerer aneinander angrenzender Filter, um ein Maß für eine subjektiv empfundene Störung in der Bandbreite, die durch die gemeinsam ausgewerteten Filter definiert ist, zu erreichen. Die Bandbreite wird, um einen dem Ohr angepaßten subjektiven Eindruck zu erhalten, kleiner oder gleich einer psychoakustischen Frequenzgruppe sein.

Bevorzugte Ausführungsbeispiele der vorliegenden Erfindung werden nachfolgend bezugnehmend auf die beiliegenden Zeichnungen detaillierter erläutert. Es zeigen:

Fig. 1    eine Darstellung der Verdeckung von Tönen durch Schmalbandrauschsignale bei verschiedenen Frequenzen;

Fig. 2    das Prinzip der Verdeckung im Zeitbereich;

Fig. 3    ein allgemeines Blockdiagramm eines Audio-Meßsystems

Fig. 4    ein Blockdiagramm der Vorrichtung zur gehörangepaßten Qualitätsbeurteilung von Audiosignalen gemäß der vorliegenden Erfindung;

Fig. 5    ein Blockdiagramm einer Filterbank aus Fig. 4;

Fig. 6    eine beispielhafte Darstellung zur Verdeutlichung der Konstruktion eines Verdeckungsfilters;

Fig. 7    eine Darstellung zur Verdeutlicheung der Konstruktion eines Verdeckungsfilters unter Berücksichtigung der Außen- und Mittelohr-Übertragungsfunktion und des internen Rauschens;

Fig. 8    ein detailliertes Blockdiagramm der Vorrichtung zur gehörangepaßten Qualitätsbeurteilung von Audiosignalen gemäß der vorliegenden Erfindung;

Fig. 9    eine Darstellung beispielhafter Filterkurven mit verschiedenen Abtastraten;

Fig. 10   eine Darstellung der Schwellenfunktion zur Abbildung von Pegeldifferenzen in einem Spektralabschnitt auf die Detektionswahrscheinlichkeit;

Fig. 11   eine graphische Darstellung der lokalen Detektionswahrscheinlichkeit eines beispielhaften Audiotestsignals; und

Fig. 12   eine graphische Darstellung der Frequenzgruppen-Detektionswahrscheinlichkeit des beispielhaften Audiotestsignals, das in Fig. 11 verwendet wurde.

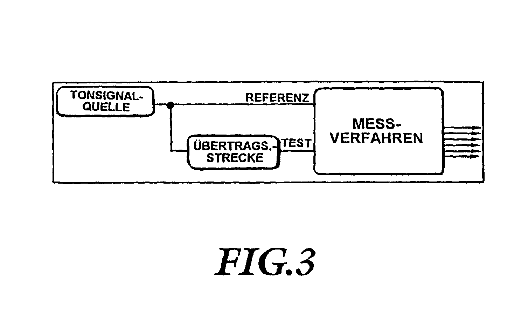

Fig. 3 zeigt ein allgemeines Blockdiagramm eines Audio-Meß-systems, das in seinen Grundzügen der vorliegenden Erfindung entspricht. Einem Meßverfahren wird einerseits ein unverarbeitetes Ausgangssignal einer Tonsignalquelle (Referenz) und andererseits ein aus einer Übertragungsstrecke, wie z.B. einer Audio-Codierer/Decodierer-Einrichtung (oder "Audio-Codec"), kommendes, zu bewertendes Signal (Test) zugeführt. Das Meßverfahren berechnet daraus verschiedene Kenngrößen, die die Qualität des Testsignals im Vergleich zum Referenzsignal beschreiben.

Eine Grundidee beim erfindungsgemäßen Verfahren zur Qualitätsbeurteilung von Audiosignalen besteht darin, daß eine genaue gehörangepaßte Analyse nur möglich ist, wenn gleichzeitig die zeitliche und die spektrale Auflösung möglichst hoch sind. Bei allen bekannten Meßverfahren ist entweder die zeitliche Auflösung durch die Verwendung einer diskreten Fourier-Transformation (DFT) sehr beschränkt (Blocklänge in der Regel 10,67 ms bis 21,33 ms) oder die spektrale Auflösung wurde durch eine zu kleine Anzahl von Analysekanälen zu stark verringert. Das erfindungsgemäße Verfahren zur Qualitätsbeurteilung von Audiosignalen liefert eine hohe Anzahl (241) von Analysekanälen bei einer hohen zeitlichen Auflösung von 0,67 ms.

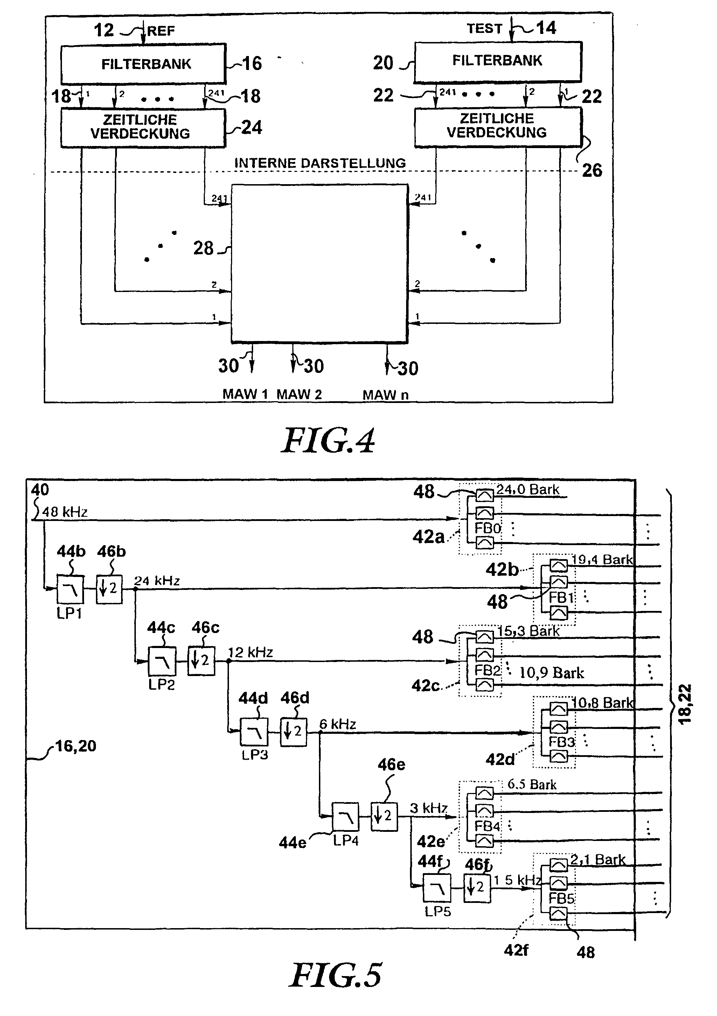

Fig. 4 zeigt ein Blockdiagramm der Vorrichtung zur gehörangepaßten Qualitätsbeurteilung von Audiosignalen gemäß der vorliegenden Erfindung, die das Verfahren der vorliegenden Erfindung ausführt. Das Verfahren zur gehörangepaßten Qualitätsbeurteilung von Audiosignalen oder zur objektiven Audio-signalbewertung (OASE; OASE = Objectiv Audio Signal Evaluation) erzeugt zunächst eine interne Darstellung eines Audioreferenzsignals 12 bzw. eines Audiotestsignals 14. Zu diesem Zweck wird das Audioreferenzsignal 12 in eine erste Filterbank 16 eingespeist, welche das Audioreferenzsignal gemäß seiner spektralen Zusammensetzung in Audioreferenzteilsignale 18 zerlegt. Analog dazu wird das Audiotestsignal 14 in eine zweite Filterbank 20 eingespeist, welche wiederum aus dem Audiotestsignal 14 gemäß der spektralen Zusammensetzung desselben eine Mehrzahl von Audiotestteilsignalen 22 erzeugt. Eine erste Modellierungseinrichtung 24 bzw. eine zweite Modellierungseinrichtung 26 zur Modellierung der zeitlichen Verdeckung modelliert den Einfluß der bereits beschriebenen Verdeckung im Zeitbereich bezüglich jedes Audioreferenzteilsignals 18 bzw. jedes Audiotestteilsignals 22.

An dieser Stelle sei angemerkt, daß die gehörangepaßte Qualitätsbeurteilung von Audiosignalen gemäß der vorliegenden Erfindung ebenfalls durch eine einzige Filterbank oder durch eine einzige Modellierungseinrichtung zur Modellierung der zeitlichen Verdeckung ausgeführt werden kann. Lediglich aus Darstellungsgründen sind für das Audioreferenzsignal 12 bzw. für das Audiotestsignal 14 jeweils eigene Einrichtungen gezeichnet. Wenn zur spektralen Zerlegung des Audioreferenzsignals und des Audiotestsignals eine einzige Filterbank verwendet wird, muß beispielsweise während der Verarbeitung des Audiotestsignals die bereits vorher ermittelte spektrale Zusammensetzung des Audioreferenzsignals zwischengespeichert werden können.

Die bezüglich der zeitlichen Verdeckung modellierten Audioreferenzteilsignale 18 bzw. Audiotestteilsignale 22 werden einer Auswertungseinrichtung 28 zugeführt, welche eine nachfolgend beschriebene Detektion und Gewichtung der erhaltenen Ergebnisse durchführt. Die Auswertungseinrichtung 28 gibt eines oder eine Mehrzahl von Modellausgangswerten MAW1 ... MAWn aus, die auf verschiedene Arten und Weisen Unterschiede zwischen dem Audioreferenzsignal 12 und dem von dem Audioreferenzsignal 12 durch Codierung und Decodierung abgeleiteten Audiotestsignal 14 darstellen. Wie es nachfolgend beschrieben wird, ermöglichen die Modellausgangswerte MAW1 ... MAWn eine frequenz- und zeitselektive Qualitätsbeurteilung des Audiotestsignals 14.

Die interne Darstellung des Audioreferenzsignals 12 bzw. des Audiotestsignals 14, die der Auswertung in der Auswertungseinrichtung 28 zugrunde liegen, entsprechen den Informationen, die vom Ohr über den Hörnern dem menschlichen Gehirn übermittelt werden. Durch die Ausgabe mehrerer Modellausgangswerte MAW1 ... MAWn ist eine detailliertere Aussage über den qualitativen und auch subjektiven Eindruck möglich, als wenn lediglich ein einzelner Modellausgangswert ausgegeben werden würde. Insbesondere subjektive Unterschiede in der Gewichtung verschiedener Artefakte können sich damit weniger störend auswirken.

Fig. 5 zeigt den Aufbau der ersten Filterbank 16 bzw. der zweiten Filterbank 20, falls zwei getrennte Filterbanken verwendet werden. Falls lediglich eine Filterbank für die Verarbeitung beider Signale in Kombination mit einer Zwischenspeicherung verwendet wird, stellt Fig. 5 den Aufbau der einzigen verwendeten Filterbank dar. In einen Signaleingang 40 wird ein in seine spektrale Zusammensetzung zu zerlegendes Audiosignal eingegeben, um eine Mehrzahl von Teilsignalen 18, 22 am Ausgang der Filterbank 16 bzw. 20 zu erhalten. Die Filterbank 16, 20 ist in eine Mehrzahl von Unterfilterbänken 42a bis 42f gegliedert. Das an dem Signaleingang 40 anliegende Signal läuft direkt in die erste Unterfilterbank 42a. Um in die zweite Unterfilterbank 42b zu gelangen, wird das Signal mittels eines ersten Tiefpaßfilters 44b gefiltert und mittels einer ersten Dezimiereinrichtung 46 bearbeitet, damit das Ausgangssignal der Dezimiereinrichtung 46b eine Datenrate von 24 kHz besitzt. Die Dezimiereinrichtung 46 entfernt also jeden zweiten Wert des an dem Signaleingang 40 anliegenden Datenstroms, um den Rechenaufwand und die zu verarbeitende Datenmenge der Filterbank wirksam zu halbieren. Das Ausgangssignal der ersten Dezimiereinrichtung 46b wird in die zweite Unterfilterbank eingespeist. Weiterhin wird dasselbe in ein zweites Tiefpaßfilter 44c und in eine darauffolgende zweite Dezimiereinrichtung 46c eingespeist, um die Datenrate desselben wieder zu halbieren. Die dann entstehende Datenrate beträgt 12 kHz. Das Ausgangssignal der zweiten Dezimiereinrichtung 46c wird wiederum in die dritte Unterfilterbank 42c eingespeist. Auf ähnliche Weise werden die Eingangssignale für die anderen Filterbanken 42d, 42e und 42f erzeugt, wie es in Fig. 5 dargestellt ist. Die Filterbank 16, 20 implementiert somit eine sogenannte Multirate-Struktur, da sie eine Mehrzahl von Unterfilterbanken 42a - 42f aufweist, welche mit mehreren ("multi") jeweils unterschiedlichen Abtastraten ("rates") arbeiten.

Jede Unterfilterbank 42a - 42b setzt sich wiederum aus einer Mehrzahl von Bandpaßfiltern 48 zusammen. Bei einem bevorzugten Ausführungsbeispiel der vorliegenden Erfindung enthält die Filterbank 16, 20 241 einzelne Bandpaßfilter 48, die in einem gleichmäßigen Raster auf der Bark-Skala angeordnet sind, wobei sich ihre Mittenfrequenzen um 0,1 Bark unterscheiden. Die Einheit Bark ist für Fachleute auf dem Gebiet der Psychoakustik bekannt und beispielsweise in E. Zwicker, Psychoakustik, Springer-Verlag, Berlin Heidelberg New York, 1982, beschrieben.

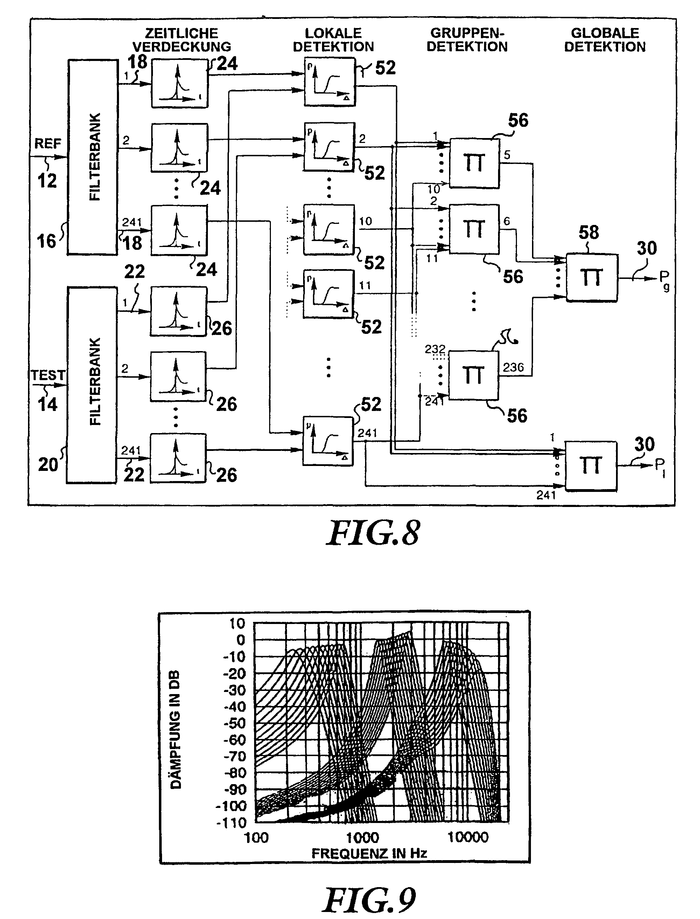

Fig. 9 zeigt einige beispielhafte Filterkurven mit den Abtastraten 3 kHz, 12 kHz und 48 kHz. Die linke Gruppe von Filterkurven in Fig. 9 entspricht der Abtastrate von 3 kHz, während die mittlere Kurve einer Abtastrate von 12 kHz entspricht und die rechte Gruppe für Abtastrate von 48 kHz gilt.

Prinzipiell ergibt sich die minimale Abtastrate für jedes einzelne Bandpaßfilter 28 aus dem Punkt, an dem seine obere Flanke die Dämpfung -100 dB in Fig. 9 unterschreitet. Aus Gründen der Einfachheit wurde jedoch nur immer die nächsthöhere Abtastrate für jedes Bandpaßfilter 48 gewählt, welche der Formel $f_A = 2^{-n} \cdot 48$ kHz erfüllt, wobei $f_A$ die Daten-oder Abtastrate des einzelnen betrachteten Bandpaßfilters 48 ist, und der Index n von 1 bis 5 läuft, wodurch sich die in Fig. 9 gezeigten Gruppierungen ergeben. Analog dazu ergibt sich die Gliederung der Filterbank 16, 20 in die fünf Unterfilterbanken FB1 bis FB5. Alle Filter, die auf der gleichen Abtastrate arbeiten, können eine gemeinsame Vorverarbeitung durch das jeweilige Tiefpaßfilter 44b bis 44f und die jeweilige Dezimiereinrichtung 46b bis 46f nutzen. Das Zustandekommen der einzelnen Filtererregungskurven bzw. Filterfunktionen wird nachfolgend detailliert dargestellt.

Alle in Fig. 5 gezeigten Bandpaßfilter 48 sind bei einem bevorzugten Ausführungsbeispiel mittels digitaler FIR-Filter realisiert, von denen jedes FIR-Filter 128 Filterkoeffizienten aufweist, die auf für Fachleute bekannte Art und Weise errechnet werden können, wenn die Filterkurve bzw. die Filterfunktion bekannt ist. Dies kann durch eine schnelle Faltung erreicht werden, wobei alle Filter von FB0 (42a) und LP1 (44b) (LP = Low Pass = Tiefpaß) gemeinschaftlich eine FFT zur Berechnung der Filter benutzen können. Die Grenzfrequenzen der Tiefpaßfilter 44b bis 44f müssen gewählt werden, um zusammen mit der für die jeweilige Unterfilterbank maßgeblichen Abtastrate keine Verletzung des Abtasttheorems zu bewirken.

An dieser Stelle sei angemerkt, daß das Ausgangssignal 1, 2, ..., 241 jedes Filters, d.h. ein Testteilsignal bzw. Referenzteilsignal, eine Bandbreite aufweist, die durch das entsprechende Filter, das das Teilsignal erzeugt hat, definiert ist. Diese Bandbreite eines einzigen Filters wird auch als Spektralabschnitt bezeichnet. Die Mittenfrequenz eines Spektralabschnitts entspricht also der Mittenfrequenz des entsprechenden Bandfilters, während die Bandbreite eines Spektralabschnitts gleich der Bandbreite des entsprechenden Filters ist. Somit ist es offensichtlich, daß sich die einzelnen Spektralabschnitte bzw. Bandfilterbandbreiten überlappen, da die Spektralabschnitte breiter als 0,05 Bark sind. (0,1 Bark ist der Abstand der Mittenfrequenz eines Bandfilters zum nächsten Bandfilter.)

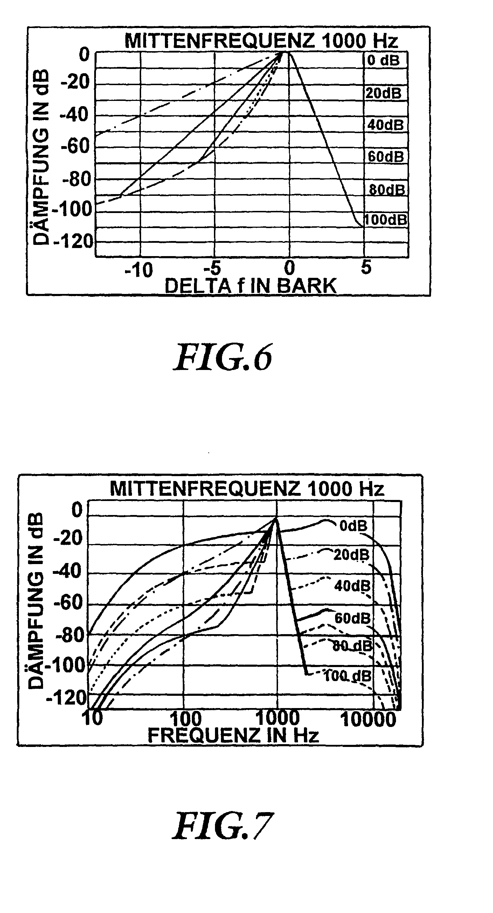

Fig. 6 stellt die Konstruktion eines Verdeckungsfilters 48 beispielhaft an dem Bandpaßfilter mit der Mittenfrequenz $f_m$ von 1.000 Hz dar. An der Ordinate von Fig. 6 ist die Filterdämpfung in dB aufgetragen, während die Abszisse die links-bzw. rechtsseitige Frequenzabweichung von der Mittenfrequenz $f_m$ in Bark aufträgt. Der Parameter in Fig. 6 ist der Schalldruckpegel eines durch das Filter gefilterten Audiosignals. Der Schalldruckpegel des gefilterten Audiosignals kann sich von 0 dB bis zu 100 dB erstrecken. Wie es bereits erwähnt wurde, hängt die Filterform eines modellmäßig gesehenen Bandfilters des menschlichen Ohrs von dem Schalldruckpegel des empfangenen Audiosignals ab. Wie es in Fig. 6 zu sehen ist, ist die linke Filterflanke bei hohen Schalldruckpegeln relativ flach und wird zu kleineren Schalldruckpegeln hin steiler. Dagegen geht die steilere Flanke bei kleineren Schalldruckpegeln schneller in die Ruhehörschwelle über, die in Fig. 6 die geraden Fortsetzungen der einzelnen beispielhaften Filterflanken sind.

Die Abhängigkeit vom Schalldruckpegel des Audiosignals könnte durch eine Umschaltung zwischen verschiedenen Koeffizientensätzen der digitalen Bandfilter 48 der Filterbank erreicht werden. Dies hätte neben einer sehr hohen Komplexität aber auch den Nachteil, daß das Verfahren sehr anfällig gegen Veränderungen der Abhörlautstärke werden würde. (Siehe Kh. Brandenburg und Th. Sporer. "NMR" und "Masking Flag": Evaluation of quality using perceptual criteria. In *Proceedings of the 11th International Conference of the AES*, Portland, 1992).

Bei der gehörangepaßten Qualitätsbeurteilung von Audiosignalen gemäß der vorliegenden Erfindung wurde deshalb ein anderer Weg gewählt. Aus den Filterkurven, die sich für unterschiedliche Schalldruckpegel ergeben würden, wird eine Kurve 50 für den schlechtesten Verdeckungsfall oder "Worst-Case" gebildet. Die Worst-Case-Kurve 50 ergibt sich bei einer bestimmten Frequenzabweichung von der Mittenfrequenz $f_m$ aus dem Minimalwert aller Schalldruckpegelkurven in einem bestimmten Nennschalldruckpegelbereich, der sich beispielsweise von 0 dB bis 100 dB erstrecken kann. Die Worst-Case-Kurve erhält so nahe der Mittenfrequenz eine steile Flanke und wird mit wachsendem Abstand zur Mittenfrequenz flacher, wie es durch die Kurve 50 in Fig. 6 angedeutet ist. Wie es ebenfalls aus Fig. 6 zu sehen ist, ist die bezüglich der Mittenfrequenz $f_m$ rechte Filterflanke eines Bandpaßfilters 48 abgesehen von der Ruhehörschwelle nur gering von dem Schalldruckpegel des gefilterten Audiosignals abhängig. D.h., daß die Neigungen der rechten Kurvenflanken für einen Schalldruckpegel von 0 dB bis zu einem Schalldruckpegel von 100 dB nahezu gleich sind.

Bei der gehörangepaßten Qualitätsbeurteilung von Audiosignalen gemäß der vorliegenden Erfindung wird ferner der Einfluß der Außen- und Mittelohrübertragungsfunktion und des internen Rauschens, das beispielsweise durch den Blutstrom im Ohr verursacht wird, berücksichtigt. Die sich daraus ergebenden Kurven für einzelne Schalldruckpegel von 0 dB bis 100 dB sind in Fig. 7 dargestellt. Im Gegensatz zu Fig. 6 ist bei Fig. 7 an der Abszisse der Spektralbereich in Hz aufgetragen und nicht die Frequenzskala in Bark, welche auch Tonheitsskala bezeichnet wird. Mathematisch formuliert kann die Außen- und Mittelohr-Übertragungsfunktion und das interne Rauschen des Ohrs durch folgende Gleichung modelliert werden:

$$\frac{a_0(f)}{dB} = -6.5 \cdot e^{-0.6\left(\frac{f}{1000\,Hx}-3.3\right)^2} + 1.82\left(\frac{f}{1000\,Hz}\right)^{-0.8} + 0.5\cdot 10^{-3}\left(\frac{f}{1000\,Hz}\right)^4$$

Die Größe $a_0(f)$ stellt die Dämpfung des Ohrs über dem gesamten Frequenzbereich dar und ist in dB angegeben.

Die Verdeckungskurven oder Filterkurven für die einzelnen Bandpaßfilter 48 können durch folgende mathematische Gleichung abhängig von der Mittenfrequenz $f_m$ und abhängig von dem Schalldruckpegel L modelliert werden:

$$\frac{A(\Delta b, f_m, L)}{dB} = A_0(f_m, L) + \frac{S_1 + S_2(f_m, L)}{2}\cdot\left(\frac{\Delta b}{Bark} + C_1(f_m, L)\right) - \frac{S_1 + S_2(f_m, L)}{2}\sqrt{C_2 + \left(\frac{\Delta b}{Bark} + C_1(f_m, L)\right)^2}$$

Die einzelnen in der Gleichung verwendeten Größen sind im nachfolgenden aufgestellt:

$f_m$ = Mittenfrequenz eines Bandpaßfilters;

$\triangle b$ = Frequenzunterschied in Bark zwischen der Mittenfrequenz $f_m$ des Filters und-einer Testfrequenz;

$f_m$ = Mittenfrequenz eines Bandpaßfilters;

L = Schalldruckpegel des gefilterten Audiosignals;

Abrundungsfaktor $C_2$ = 0,1;

Steilheit der unteren Flanke $S_1$ = 27 (dB/Bark);

Steilheit der oberen Flanke:

$$S_2(f_m,L) = 24 + 230Hz/f_m - 0,2 \cdot L/dB;$$

Konstante $C_1$:

$$C_1(f_m,L) = (S_1 - S_2(f_m,L)/2 \cdot \sqrt{C_2/(S_1 \cdot S_2(f_m,L))};$$

Konstante

$$A_0(f_m,L) = \sqrt{C_2 \cdot S_1 \cdot S_2 \ (f_m, L)};$$

Die Umrechungsgleichung von der Frequenzskala in Hertz zur Frequenzsskala in Bark lautet folgendermaßen:

$$\frac{Hz2Bark(f)}{Bark} = 13 \cdot \arctan(0.76 \frac{f}{1000 Hz}) + 3.5 \cdot \arctan((\frac{f}{7500 Hz})^2)$$

Wird in die Verdeckungskurve A eine virtuelle Ruhehörschwelle bei -10 dB miteinbezogen, so ergibt sich eine Grenzverdeckungskurve $A_{lim}$, welche folgendermaßen gegeben ist:

$$A_{lim}(\triangle b, f_m, L) = \max(A(\triangle b, f_m, L), -L - 10dB)$$

Der Übergang von der Bark-Skala auf die Hertz-Skala für die Verdeckungskurve inklusive der virtuellen Ruhehörschwelle zusammen mit der Einbeziehung der Außen- und Mittelohr-Übertragungsfunktion $A_0(f)$ liefert die erweiterte Grenzverdeckungskurve $A_{lim}$, die noch von dem Schalldruckpegel des Audiosignals abhängt:

$$\hat{A}_{lim}(f, f_m, L) = A_{lim}(Hz2Bark(f_m)-Hz2Bark(f), f_m, L) - a_0(f)$$

Wie es bereits erwähnt wurde, ist es zu aufwendig, für jeden Schalldruckpegel eine eigene Filterkurve bzw. Verdeckungskurve zu wählen, weshalb eine Worst-Case-Kurve errechnet wird. Die Worst-Case-Kurve $A_{wc}(f, f_m)$ gibt die letztendlich verwendete Dämpfung eines Filters mit der Mittenfrequenz $f_m$ bei der aktuellen Frequenz f in Hz an. Die mathematische Formulierung der Worst-Case-Kurve $A_{wc}$ lautet folgendermaßen:

$$A_{wc}(f. f_m) = \min(\hat{A}_{lim}(f, f_m, L); -3 \ dB \le L \le 120 \ dB)$$

Fig. 8 zeigt ein Blockdiagramm der Vorrichtung bzw. des Verfahrens zur gehörangepaßten Qualitätsbeurteilung von Audiosignalen gemäß der vorliegenden Erfindung. Wie es bereits im Zusammenhang mit Fig. 5 beschrieben worden ist, wird in die Filterbank 16 das Audioreferenzsignal 12 eingespeist, um Audioreferenzteilsignale 18 zu erzeugen. Analog dazu wird das Audiotestsignal 14 in die Filterbank 20 eingespeist, um Audiotestteilsignale 22 zu erzeugen. An dieser Stelle sei angemerkt, daß es aus Fig. 6 und Fig. 7 ersichtlich ist, daß sich die einzelnen Filterkurven der Bandpaßfilter 48 jeweils überlappen, da die Mittenfrequenzen der einzelnen Filter jeweils lediglich um 0,1 Bark beabstandet sind. Jedes Bandpaßfilter 48 soll somit die Erregung einer Haarzelle auf der Basilarmembran des menschlichen Ohrs modellieren.

Die Ausgangssignale der einzelnen Bandpaßfilter der Filterbank 16 bzw. der Filterbank 20, welche einerseits die Audioreferenzteilsignale 18 bzw. die Audiotestteilsignale 22 sind, werden in jeweilige Modellierungseinrichtungen 24 bzw. 26 eingespeist, welche die zeitliche Verdeckung, die Eingangs beschrieben worden ist, modellieren sollen. Die Modellierungseinrichtungen 24, 26 dienen der Modellierung der Ruhehörschwelle und der Nachverdeckung. Die Ausgangswerte der Filterbank werden quadriert und zu denselben wird ein konstanter Wert für die Ruhehörschwelle addiert, da die Frequenzabhängigkeit der Ruhehörschwelle bereits in der Filterbank berücksichtigt worden ist, wie es vorher erläutert wurde. Ein rekursives Filter mit einer Zeitkonstante von 3 ms glättet das Ausgangssignal. Daraufhin folgt ein nichtlineares Filter, welches einerseits als Integrator die über die Dauer eines Schallereignisses auflaufende Energie aufintegriert, und welches andererseits den exponentiellen Abfall der Erregung nach dem Ende eines Schallereignisses modelliert. Einzelheiten des Aufbaus der Modellierungseinrichtungen 24 und 26 sind in M. Karjalainen, A new auditory model for the evaluation of sound quality of audio system, *Proceedings of the ICASSP*, Seiten 608 - 611, Tampa, Florida, März 1985, IEEE, beschrieben. Es sei angemerkt, daß diese Modellierung der zeitlichen Verdeckung die Bandbreite in allen Filterbändern für alle Bandpaßfilter 48 so weit reduziert, daß ein weiterer Unterabtastschritt möglich ist, durch den alle Bänder auf die gleiche Abtastrate von 1,5 kHz gebracht werden können.

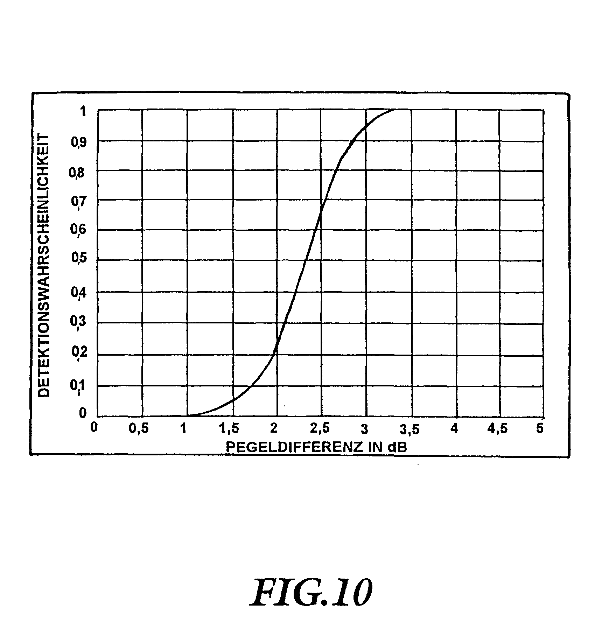

Die Ausgangssignale der Modellierungseinrichtungen 24, 26 werden anschließend in Detektionsberechnungseinrichtungen 52 eingespeist, deren Funktion im nachfolgenden erläutert wird. Wie es in Fig. 8 gezeigt ist, werden in die Detektionsberechnungseinrichtung 52 für das erste Bandpaßfilter mit der Nr. 1 das Audioreferenzteilsignal, das aus dem Bandpaßfilter mit der Nr. 1 ausgegeben wird, und das Audiotestteilsignal, das aus dem Bandpaßfilter Nr. 1 der Filterbank für das Audiotestsignal ausgegeben wird, eingespeist. Die Detektionsberechnungseinrichtung 52 bildet zum einen eine Differenz zwischen diesen beiden Pegeln und bildet zum anderen den Pegelunterschied zwischen dem Audioreferenzteilsignal und dem Audiotestteilsignal in eine Detektionswahrscheinlichkeit ab. Die Erregungen in Filterbändern 48 mit gleicher Mittenfrequenz $f_m$ vom Audioreferenzsignal und vom Audiotestsignal werden also subtrahiert und mit einer Schwellenfunktion verglichen, die in Fig. 10 dargestellt ist. Diese in Fig. 10 dargestellte Schwellenfunktion bildet den Absolutbetrag der Differenz in dB auf eine sog. "lokale Detektionswahrscheinlichkeit" ab. Die eigentliche Detektionsschwelle für das menschliche Gehirn beträgt 2,3 dB. Es ist jedoch wichtig, anzumerken, daß um die eigentliche Detektionsschwelle von 2,3 dB eine gewisse -Unsicherheit der Detektion auftritt, weswegen die in Fig. 10 gezeigte Wahrscheinlichkeitskurve verwendet wird. Eine Pegeldifferenz von 2,3 dB wird auf eine Detektionswahrscheinlichkeit von 0,5 abgebildet. Die einzelnen Detektionsberechnungseinrichtungen 52, die jeweils Bandpaßfiltern 48 zugeordnet sind, arbeiten alle parallel zueinander, wobei sie ferner auf zeitlich serielle Art und Weise jede Pegeldifferenz in eine Detektionswahrscheinlichkeit $p_{i,t}$ abbilden.

An dieser Stelle sei angemerkt, daß die gehörangepaßte Qualitätsbeurteilung von Audiosignalen im Zeitbereich arbeitet, wobei mittels digitaler Filter in der Filterbank die zeitdiskreten Eingangssignale des Audioreferenzsignals 12 und des Audiotestsignals 14 sequentiell verarbeitet werden. Somit ist es offensichtlich, daß die Eingangssignale für die Detektionsberechnungseinrichtungen 52 ebenfalls ein serieller, zeitlicher Datenstrom sind. Die Ausgangssignale der Detektionsberechnungseinrichtungen 52 sind somit ebenfalls zeitlich serielle Datenströme, die für jeden Frequenzbereich des entsprechenden Bandpaßfilters 48 zu jedem Zeitpunkt bzw. Zeitschlitz die Detektionswahrscheinlichkeit darstellen. Eine niedrige Detektionswahrscheinlichkeit einer speziellen Detektionsberechnungseinrichtung 52 in einem bestimmten Zeitschlitz läßt die Beurteilung zu, daß das von dem Audioreferenzsignal 12 durch Codierung und Decodierung abgeleitete Audiotestsignal 14 in dem speziellen Frequenzbereich und zu dem speziellen Zeitpunkt einen Codierungsfehler aufweist, der wahrscheinlich vom Gehirn nicht erfaßt werden wird. Eine große Detektionswahrscheinlichkeit sagt hingegen aus, daß das menschliche Gehirn wahrscheinlich einen Codierungs- bzw. Decodierungsfehler des Audiotestsignals erfassen wird, da das Audiotestsignal in dem speziellen Zeitschlitz und in dem speziellen Frequenzbereich einen hörbaren Fehler aufweist.

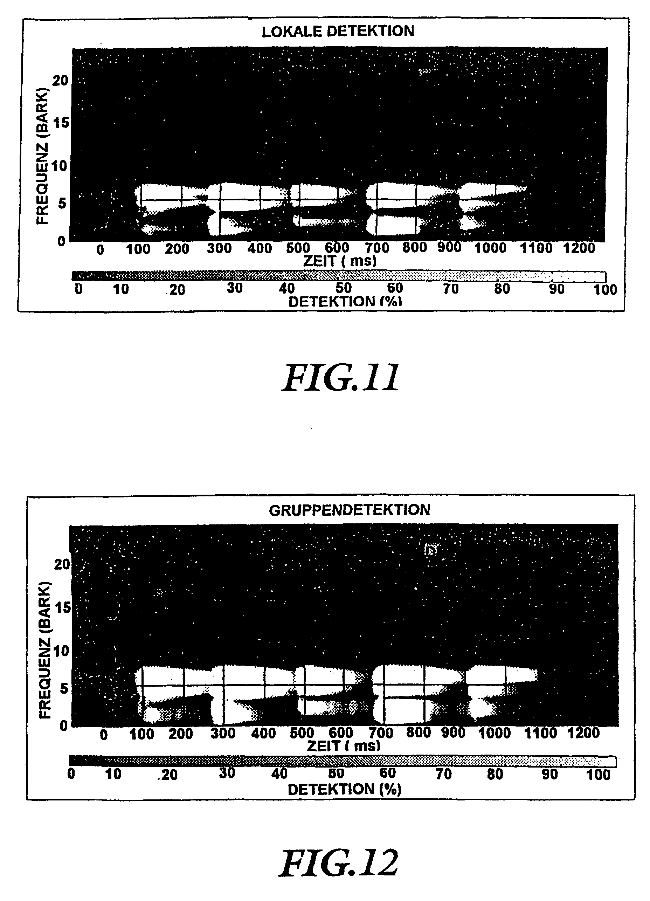

Die Ausgangssignale der Detektionsberechnungseinrichtungen 52 können wahlweise in eine Globaldetektionseinrichtung 54 oder in eine Mehrzahl-von Gruppendetektionseinrichtungen 56 eingespeist werden. Die Globaldetektionseinrichtung 54 hingegen gibt eine globale Detektionswahrscheinlichkeit aus, welche für ein bestimmtes international verwendetes Testsignal in Fig. 11 gezeigt ist. Im oberen Diagramm von Fig. 11 ist als Ordinate die Frequenz in Bark eingetragen, während die Abszisse die Zeit in ms wiedergibt. In dem unteren Diagramm ist einer speziellen Schattierung des oberen Diagramms eine bestimmte Detektionswahrscheinlichkeit in Prozent zugeordnet. Weiße Flächen im oberen Diagramm stellen vom Gehirn hundertprozentig erfaßbare Codierungs- bzw. Decodierungsfehler dar. Das verwendete Referenzsignal ist in der Technik bekannt und findet sich auf der CD SQAM (SQAM = Sound Quality Assessment Material = Tonqualitätsbeurteilungsmaterial) auf der Spur 10 und wird SQAM, Track 10, bezeichnet. Hieraus word ein absichtlich fehlerhaft codiertes bzw. decodiertes Tonsignal gewonnen, das sich ergibt, wenn ein zweigestrichenes a auf einem Violoncello gespielt wird und absichtlich fehlerhaft codiert und decodiert wird. Die Länge desselben beträgt 2,7 Sekunden, wobei jedoch in Fig. 11 und ebenso auch in Fig. 12 lediglich die ersten 1,2 Sekunden des Beispielsignals graphisch dargestellt sind.

Die Gruppendetektionseinrichtungen 56 arbeiten folgendermaßen. Zuerst bilden sie aus den in dieselben eingespeisten Detektionswahrscheinlichkeiten $p_{i,t}$ die Gegenwahrscheinlichkeiten $pg_{i,t} = 1 - p_{i,t}$ eines Zeitschlitzes t. Die Gegenwahrscheinlichkeit pg ist ein Maß dafür, daß in einem Zeitschlitz t keine Störung erfaßt werden kann. Werden nun die Gegenwahrscheinlichkeiten der Pegeldifferenzen von mehreren Bandpaßfiltern multipliziert, wie es durch das Produktsymbol in Fig. 8 dargestellt ist, so ergibt sich aus der Gegenwahrscheinlichkeit der durch die Produktbildung entstandenen Gegenwahrscheinlichkeit wiederum die globale Detektionswahrscheinlichkeit des Zeitschlitzes, wenn die Ausgangssignale der Detektionsberechnungseinrichtungen 52 alle in die Globaldetektionseinrichtung 54 eingespeist werden, wie es in Fig. 8 gezeigt ist. Wird diese Detektionswahrscheinlichkeit über der Zeit gemittelt, so erhält man die mittlere globale Detektionswahrscheinlichkeit. Eine genauere Aussage über die Qualität des Audiotestsignals bietet allerdings ein Histogramm, welches angibt, in wieviel Prozent der Zeitschlitze die globale Detektionswahrscheinlichkeit größer als 10%, 20%, ..., 90% ist.

Fig. 11 zeigt, wie es bereits erwähnt wurde, die lokale Detektionswahrscheinlichkeit, wenn direkt die Ausgangssignale der Detektionsberechnungseinrichtungen graphisch dargestellt werden. Es ist deutlich zu sehen, daß im unteren Frequenzbereich etwa unterhalb 5 Bark (ca 530 Hz) und oberhalb von 2 Bark (200 Hz) im Zeitbereich von etwa 100 ms bis 1.100 ms Codierungs- bzw. Decodierungsfehler des Audiotestsignals vom Gehirn mit sehr hoher Wahrscheinlichkeit detektiert werden. Zusätzlich ist eine kurze Störung bei 22 Bark zu sehen.

Die Störungen werden in der graphischen Darstellung deutlicher, wenn statt der lokalen Detektionswahrscheinlichkeit, welche die Ausgaben der Detektionsberechnungseinrichtungen einrichtung 52 sind, eine Frequenzgruppendetektionswahrscheinlichkeit gewählt wird, welche durch die Gruppendetektionseinrichtungen 56 berechnet wird. Die Gruppendetektionswahrscheinlichkeit stellt ein Maß dafür dar, daß in dem eine Frequenzgruppe umfassenden Bereich um ein Filter k eine Störung wahrnehmbar ist.

Bei einem bevorzugten Ausführungsbeispiel der vorliegenden Erfindung werden jeweils zehn benachbarte lokale Detektionswahrscheinlichkeiten zusammengefaßt. Da zehn benachbarte Bandfilter jeweils um 0,1 Bark voneinander beabstandet sind, entspricht die Zusammengruppierung von zehn benachbarten Detektionswahrscheinlichkeiten einem Frequenzbereich von 1 Bark. Es ist sinnvoll, die Zusammengruppierung benachbarter Detektionswahrscheinlichkeiten derart zu wählen, daß sich Frequenzbereiche ergeben, die mit den psychoakustischen Frequenzgruppen im wesentlichen übereinstimmen. Dadurch kann auf vorteilhafte Weise die Frequenzgruppenbildung des menschlichen Ohres simuliert werden, um einen eher subjektiven Höreindruck von Störungen ebenfalls graphisch anzeigen zu können. Beim Vergleich von Fig. 12 mit Fig. 11 stellt sich heraus, daß eine gruppenweise Zusammenfassung der Detektionswahrscheinlichkeiten offenbart, daß auch bei höheren Frequenzen als in Fig. 11 wahrscheinlich Codierungsbzw. Decodierungsfehler des Audiotestsignals gehört werden können. Die Gruppendetektion, welche in Fig. 12 gezeigt ist, liefert also eine realistischere Qualitätsbeurteilung von Audiosignalen als die lokale Detektion in Fig. 11, da hier die Frequenzgruppenbildung im menschlichen Ohr simuliert wird. Die Unterschiede nebeneinander liegender Filterausgangswerte (wobei die Unterschiede kleiner oder gleich einer Frequenzgruppe gewählt werden), werden also zusammen ausgewertet und ergeben ein Maß für die subjektive Störung in dem entsprechenden Frequenzbereich.

Alternativ kann die Frequenzachse in drei Abschnitte (unter 200 Hz, 200 Hz bis 6.500 Hz, über 6.500 Hz) unterteilt werden. Die Pegel des Audioreferenzsignals bzw. des Audiotestsignals können ebenfalls in drei Abschnitte unterteilt werden (Stille; leise: bis 20 dB; laut: über 20 dB). Somit ergeben sich neun verschiedene Typen, denen ein Filterabtastwert angehören kann. Zeitabschnitte, in denen alle Filterausgangswerte beider Eingangssignale dem Typ Stille angehören, müssen nicht weiter betrachtet werden. Aus den übrigen sechs werden Maße für die Detektionswahrscheinlichkeit des Unterschieds zwischen den Eingangssignalen für jeden Zeitschlitz bestimmt, wie es oben erwähnt wurde. Zusätzlich zu der Bestimmung der Detektionswahrscheinlichkeit kann auch eine sog. Störlautheit definiert werden, die ebenfalls mit der Pegeldifferenz, die durch die Detektionsberechnungseinrichtungen 52 berechnet wird, korreliert ist, und angibt, wie stark ein Fehler stören wird. Anschließend werden getrennte Mittelwerte der Störlautheit und der Detektionswahrscheinlichkeit für jeden der sechs Typen berechnet.

Ferner werden Kurzzeitmittelwerte über einen Zeitraum von 10 ms berechnet, wobei die 30 schlechtesten Kurzzeitmittelwerte eines kompletten Audiosignals gespeichert werden. Die Mittelwerte wiederum über diese 30 WorstCase-Werte und der Gesamtmittelwerte ergeben zusammen den Höreindruck. Hierbei ist anzumerken, daß WorstCase-Werte sinnvoll sind, wenn Störungen sehr ungleichmäßig verteilt sind. Gesamtmittelwerte sind dagegen sinnvoll, wenn häufig kleine, jedoch hörbare Störungen auftreten. Die Entscheidung, ob die Gesamtmittelwerte oder die WorstCase-Werte zur Beurteilung des Audiotestsignals herangezogen werden sollen, kann über eine Extremwert-Verknüpfung dieser beiden Beurteilungswerte erreicht werden.

Die bisher beschriebene gehörangepaßte Qualitätsbeurteilung von Audiosignalen bezog sich auf monoaurale bzw. Mono-Audio-signale. Die gehörangepaßte Qualitätsbeurteilung von Audiosignalen gemäß der vorliegenden Erfindung ermöglicht jedoch auch eine Beurteilung von binauralen oder stereophonen Audiotestsignalen durch eine nichtlineare Vorverarbeitung zwischen der Filterbank 16 bzw. 20 und der Detektion in den Detektionsberechnungseinrichtungen 52. Wie es für Fachleute bekannt ist, weisen stereophone Audiosignale jeweils einen linken und einen rechten Kanal auf. Der linke und rechte Kanal des Audiotestsignals bzw. des Audioreferenzsignals werden jeweils getrennt mittels eines nichtlinearen Elements, das Transienten frequenzselektiv hervorhebt und stationäre Signale verringert, gefiltert. Die Ausgangssignale dieser Operation werden im nachfolgenden als das modifizierte Audiotestsignal bzw. das modifizierte Audioreferenzsignal bezeichnet. Die Detektion in den Detektionsberechnungseinrichtungen 52 wird nun nicht mehr einmal, wie es vorher beschrieben worden ist, sondern viermal durchgeführt, wobei jeweils folgende Eingangssignale abwechselnd in die Detektionsberechnungseinrichtungen 52 eingespeist werden:

erste Detektion, linker Kanal (D1L): linker Kanal des Audioreferenzsignals mit linkem Kanal des Audiotestsignals;

erste Detektion, rechter Kanal (D1R): rechter Kanal des Audioreferenzsignals mit rechtem Kanal des Audiotestsignals;

zweite Detektion, linker Kanal (D2L): linker Kanal des modifizierten Audioreferenzsignals mit linkem Kanal des modifizierten Audiotestsignals; und

zweite Detektion, rechter Kanal (D2R): rechter Kanal des modifizierten Audioreferenzsignals mit rechtem Kanal des modifizierten Audiotestsignals.

Von den Detektionen D1L und D1R bzw. D2L und D2R wird nun jeweils der Worst-Case-Wert bestimmt, wonach die derart entstandenen Werte über einen gewichteten Mittelwert vereinigt werden, um die Qualität des stereophonen Audiotestsignals zu beurteilen.

**Patentansprüche**

1. Verfahren zur gehörangepaßten Qualitätsbeurteilung eines Audiotestsignals (14), das durch Codierung und Decodierung von einem Audioreferenzsignal (12) abgeleitet ist, mit folgenden Schritten:

   Zerlegen des Audiotestsignals (14) gemäß seiner spektralen Zusammensetzung mittels einer ersten Filterbank (20) aus einander sich frequenzmäßig überlappenden, Spektralabschnitte definierenden Filtern (48) mit voneinander abweichenden Filterfunktionen, die jeweils aufgrund der Erregungskurven des menschlichen Ohrs bei der jeweiligen Filtermittenfrequenz $f_m$ festgelegt sind, in Audiotestteilsignale (22), wobei eine Erregungskurve des menschlichen Ohrs bei einer Filtermittenfrequenz von dem Schalldruckpegel eines dem Ohr zugeführten Audiosignals abhängt;

   Zerlegen des Audioreferenzsignals (12) gemäß seiner spektralen Zusammensetzung mittels der ersten Filterbank (20) oder einer mit der ersten Filterbank (20) übereinstimmenden zweiten Filterbank (16) in Audioreferenzteilsignale (18);

   spektralabschnittsweises Bilden der Pegeldifferenz zwischen den zu gleichen Spektralabschnitten gehörigen Audiotestteilsignalen (22) und Audioreferenzteilsignalen (18); und

   spektralabschnittsweises Bestimmen einer Detektionswahrscheinlichkeit für die Erfassung eines Codierungsfehlers des Audiotestsignals (14) in dem betreffenden Spektralabschnitt aufgrund der jeweiligen Pegeldifferenz, wobei die Detektionswahrscheinlichkeit die Wahrscheinlichkeit simuliert, daß eine Pegeldifferenz zwischen einem Audioreferenzteilsignal und einem Audiotestteilsignal vom menschlichen Gehirn erfaßt wird.

2. Verfahren nach Anspruch 1,
   bei dem die Erregungskurve eine Außen- und Mittelohr-Übertragungsfunktion und internes Rauschen des menschlichen Ohrs berücksichtigt.

3. Verfahren nach Anspruch 1 oder 2,
   bei dem die Erregungskurven der Filter (48) der ersten und der zweiten Filterbank (16, 20) gemäß der Mittenfrequenz der Filter festgelegt sind, um die zu hohen Frequenzen hin abnehmende Frequenzauflösung des menschlichen Ohrs anzunähern.

4. Verfahren nach einem der Ansprüche 1 bis 3,
   bei dem die Erregungskurven der Filter (48) der ersten und der zweiten Filterbank (16, 20) gemäß dem Schalldruckpegel des Audiotestsignals bzw. des Audioreferenzsignals (12) festgelegt sind, um bei höheren Schalldruckpegeln flachere Filterflanken und niedrigere Ruhehörschwellen als bei niedrigen Schalldruckpegeln aufzuweisen.

5. Verfahren nach einem der Ansprüche 1 bis 3,
   bei dem die Erregungskurven der Filter (48) der ersten und der zweiten Filterbank (16, 20) gemäß dem Schalldruckpegel des Audiotestsignals (14) bzw. des Audioreferenzsignals (12) festgelegt sind, damit jeweils eine Filterfunktion aus Minimaldämpfungswerten aller in einem Schalldruckpegelbereich möglichen, einem bestimmten Schalldruckpegel entsprechenden Filterfunktionen gebildet wird.

**6.** Verfahren nach einem der Ansprüche 1 bis 5,
das vor dem Schritt des spektralabschnittsweisen Bildens der Pegeldifferenz die Schritte des spektralabschnittsweisen Modellierens der zeitlichen Verdeckung des Audiotestsignals (14) und des Audioreferenzsignals (12) aufweist.

**7.** Verfahren nach Anspruch 6,
bei dem der Schritt des spektralabschnittsweisen Modellierens der zeitlichen Verdeckung das spektralabschnittsweise Integrieren eines Audioreferenzsignals (12) oder eines Audiotestsignals (14) zur Berücksichtigung der Vorverdeckung und das spektralabschnittsweise exponentielle Dämpfen des Audioreferenzsignals (12) oder des Audiotestsignals (14) zur Berücksichtigung der Nachverdeckung aufweist.

**8.** Verfahren nach einem der Ansprüche 1 bis 7,
bei dem die Filter (48) der ersten und der zweiten Filterbank (16, 20) unterschiedliche Abtastraten aufweisen, wobei die Abtastrate durch den Schnittpunkt der frequenzmäßig oberhalb der Mittenfrequenz $f_m$ eines Filters (48) angeordneten Filterflanke mit einer vorbestimmten Filterdämpfung bestimmt ist.

**9.** Verfahren nach Anspruch 8, bei dem die Schritte des Zerlegens des Audiotestsignals und des Audioreferenzsignals folgenden Schritt aufweisen:
Einspeisen des Audiotestsignals und des Audioreferenzsignals in eine Mehrzahl von Unterfilterbanken (42a-42f), die durch Gruppieren von benachbarten Filtern (48) erhalten werden, wobei die Filter in einer Unterfilterbank die gleiche Abtastrate haben, und wobei die Abtastraten der Unterfilterbanken voneinander unterschiedlich sind und durch den Quotienten der ursprünglichen Abtastrate, mit der das Audiotestsignal (14) und das Audioreferenzsignal (12) diskretisiert worden sind, und einer jeder Unterfilterbank zugeordneten Potenz von 2 bestimmt sind.

**10.** Verfahren nach einem der Ansprüche 1 bis 9,
bei dem vor dem Schritt des spektralabschnittsweisen Bildens der Pegeldifferenz eine Verzögerung zwischen dem Audioreferenzsignal (12) und dem Audiotestsignal (14) bestimmt und ausgeglichen wird.

**11.** Verfahren nach einem der Ansprüche 1 bis 10, bei dem der Schritt des spektralabschnittsweisen Bestimmens einer Detektionswahrschweinlichkeit folgende Teilschritte aufweist:

Zuweisen einer Detektionswahrscheinlichkeit von 0,5 zu einer bestimmten Schwellenpegeldifferenz;
Zuweisen einer Detektionswahrscheinlichkeit, die kleiner als 0,5 ist, zu einer Pegeldifferenz, die kleiner als die bestimmte Schwellenpegeldifferenz ist; und
Zuweisen einer Detektionswahrscheinlichkeit, die größer als 0,5 ist, zu einer Pegeldifferenz, die größer als die bestimmte Schwellenpegeldifferenz ist.

**12.** Verfahren nach einem der Ansprüche 1 bis 11,
bei dem die Detektionswahrscheinlichkeiten nebeneinanderliegender Spektralabschnitte in einem Spektralbereich, der kleiner oder gleich einer psychoakustischen Frequenzgruppe ist, zusammen ausgewertet werden, wodurch eine subjektive Empfindung des Codierungsfehlers des Audiotestsignals (14) erreicht wird.

**13.** Verfahren nach einem der Ansprüche 1 bis 12,
bei dem mehrere zeitlich aufeinanderfolgende Detektionswahrscheinlichkeiten zu einem Zeitschlitz zusammengefaßt werden, und die mehreren zeitlich aufeinanderfolgenden Detektionswahrscheinlichkeiten verknüpft werden, um eine Gesamtdetektionswahrscheinlichkeit für einen Zeitschlitz zu erhalten.

**14.** Verfahren nach einem der Ansprüche 1 bis 13,
bei dem Kurzzeitmittelwerte der Detektionswahrscheinlichkeiten in einem Spektralabschnitt gebildet werden, und eine Anzahl von Kurzzeitmittelwerten eines Audiotestsignals gespeichert wird, wobei ein Gesamtmittelwert aller Kurzzeitmittelwerte zusammen mit den gespeicherten Kurzzeitmittelwerten einen Gesamthöreindruck des betreffenden Spektralabschnitts des Audiotestsignals (14) ergeben.

**15.** Verfahren nach einem der Ansprüche 1 bis 14,

bei dem das Audiotestsignal und das Audioreferenzsignal Stereosignale mit einem linken und einem rechten Kanal sind;

bei dem die Schritte des Zerlegens des Audiotestsignals und des Audioreferenzsignals das getrennte Zerlegen des linken und rechten Kanals der Signale mittels eines nichtlinearen Elements aufweisen, das Transienten hervorhebt und stationäre Signale verringert, um ein modifiziertes Audiotestsignal mit einem linken und einem rechten Kanal und ein modifiziertes Audioreferenzsignal mit einem linken und einem rechten Kanal zu erzeugen; und

bei dem das spektralabschnittsweise Bilden der Pegeldifferenz das Bilden der Pegeldifferenz zwischen den zu gleichen Spektralabschnitten gehörigen

Audiotestteilsignalen des linken Kanals und Audioreferenzteilsignalen des linken Kanals,

Audiotestteilsignalen des rechten Kanals und Audioreferenzteilsignalen des rechten Kanals,

modifizierten Audiotestteilsignalen des linken Kanals und modifizierten Audioreferenzteilsignalen des linken Kanals, und

modifizierten Audiotestteilsignalen des rechten Kanals und modifizierten Audioreferenzteilsignalen des rechten Kanals aufweist.

**16.** Verfahren nach Anspruch 15,

bei dem aus den Pegeldifferenzen der Signale für den linken und für den rechten Kanal spektralabschnittsweise die größte Pegeldifferenz bestimmt wird;

bei dem aus den Pegeldifferenzen der modifizierten Signale für den linken und für den rechten Kanal spektralabschnittsweise die größte Pegeldifferenz bestimmt wird; und

bei dem die größte Pegeldifferenz für das Audiotestsignal und die größte Pegeldifferenz für das modifizierte Audiotestsignal über einen gewichteten Mittelwert vereinigt werden, um den Codierungsfehler des stereophonen Audiotestsignals zu erfassen.

**17.** Verfahren nach einem der Ansprüche 1 bis 16,
bei dem die erste und die zweite Filterbank (16, 20) eine einzige Filterbank sind, wobei während des Zerlegens des Audiotestsignals (14) oder des Audioreferenzsignals (12) die Audioreferenzteilsignale bzw. die Audiotestteilsignale zwischengespeichert werden.

**18.** Vorrichtung zur gehörangepaßten Qualitätsbeurteilung eines Audiotestsignals (14), das durch Codierung und Decodierung von einem Audioreferenzsignal (12) abgeleitet ist, mit folgenden Merkmalen:

einer ersten Filterbank (16) zum Zerlegen des Audiotestsignals (14) gemäß seiner spektralen Zusammensetzung in Audiotestteilsignale (22), wobei die erste Filterbank (16) sich einander frequenzmäßig überlappende, Spektralabschnitte definierende Filter mit voneinander abweichenden Filterfunktionen aufweist, die jeweils aufgrund der Erregungskurven des menschlichen Ohrs bei der jeweiligen Filtermittenfrequenz festgelegt sind, wobei eine Erregungskurve des menschlichen Ohrs bei einer Filtermittenfrequenz von dem Schalldruckpegel eines dem Ohr zugeführten Audiosignals abhängt;

einer zweiten Filterbank (20), die mit der ersten Filterbank (16) übereinstimmt, zum Zerlegen des Audioreferenzsignals (12) gemäß seiner spektralen Zusammensetzung in Audioreferenzteilsignale (18);

einer Berechnungseinrichtung zum spektralabschnittsweisen Bilden der Pegeldifferenz zwischen den zu gleichen Spektralabschnitten gehörigen Audiotestteilsignalen (22) und Audioreferenzteilsignalen (18); und

einer Zuweisungseinrichtung (52) zum spektralabschnittsweisen Bestimmen einer Detektionswahrscheinlichkeit für die Erfassung eines Codierungsfehlers des Audiotestsignals (14) in dem betreffenden Spektralabschnitt aufgrund der jeweiligen Pegeldifferenz, wobei die Detektionswahrscheinlichkeit die Wahrscheinlichkeit simuliert, daß eine Pegeldifferenz zwischen einem Audioreferenzteilsignal und einem Audiotestteilsignal vom menschlichen Gehirn erfaßt wird.

**19.** Vorrichtung gemäß Anspruch 18,
welche ferner eine Modellierungseinrichtung (24) zum spektralabschnittsweisen Modellieren der zeitlichen Verdeckung des Audiotestsignals (14) und des Audioreferenzsignals (12) aufweist.

**20.** Vorrichtung nach Anspruch 19,
bei der die Modellierungseinrichtung (24) eine Integrationseinrichtung zum spektralabschnittsweisen Integrieren eines Audioreferenzteilsignals oder eines Audiotestteilsignals zur Berücksichtigung der Vorverdeckung und eine Dämpfungseinrichtung zum spektralabschnittsweisen exponentiellen Dämpfen des Audioreferenzteilsignals oder des Audiotestteilsignals zur Berücksichtigung der Nachverdeckung aufweist.

**21.** Vorrichtung nach einem der Ansprüche 18 bis 20,
die ferner eine Mehrzahl von Gruppenauswertungseinrichtungen (56) zum gemeinsamen Auswerten nebeneinanderliegender Spektralabschnitte aufweist, um eine subjektive Empfindung des Codierungsfehlers des Audiotestsignals (14) zu erreichen, wobei die Anzahl der nebeneinanderliegenden gemeinsam ausgewerteten Spektralabschnitte derart gewählt ist, daß eine durch die gemeinsam ausgewerteten Spektralabschnitte gebildete Bandbreite kleiner oder gleich einer psychoakustischen Frequenzgruppe ist.

**22.** Vorrichtung nach einem der Ansprüche 18 bis 21,
die ferner eine Globalauswertungseinrichtung (54) zum gemeinsamen Auswerten aller Spektralabschnitte aufweist, um eine globale Darstellung des Codierungsfehlers des Audiotestsignals (14) zu erreichen.

**23.** Vorrichtung zur gehörangepaßten Qualitätsbeurteilung eines Audiotestsignals (14), das durch Codierung und Decodierung von einem Audioreferenzsignal (12) abgeleitet ist, mit folgenden Merkmalen:

einer Filterbank (16) zum Zerlegen des Audiotestsignals (14) gemäß seiner spektralen Zusammensetzung in Audiotestteilsignale (22) und zum Zerlegen des Audioreferenzsignals (12) gemäß seiner spektralen Zusammensetzung in Audioreferenzteilsignale (18), wobei die Filterbank (16) sich einander frequenzmäßig überlappende, Spektralabschnitte definierende Filter mit voneinander abweichenden Filterfunktionen aufweist, die jeweils aufgrund der Erregungskurven des menschlichen Ohrs bei der jeweiligen Filtermittenfrequenz festgelegt sind, wobei eine Erregungskurve des menschlichen Ohrs bei einer Filtermittenfrequenz von dem Schalldruckpegel eines dem Ohr zugeführten Audiosignals abhängt;

einer Zwischenspeichereinrichtung zum Zwischenspeichern der spektralen Zusammensetzung des Audiotestsignals (14) bzw. des Audioreferenzsignals (12) während das Audioreferenzsignal (12) bzw. das Audiotestsignal (14) von der Filterbank (16) verarbeitet wird;

einer Berechnungseinrichtung zum spektralabschnittsweisen Bilden der Pegeldifferenz zwischen den zu gleichen Spektralabschnitten gehörigen Audiotestteilsignalen (22) und Audioreferenzteilsignalen (18); und

einer Zuweisungseinrichtung (52) zum spektralabschnittsweisen Bestimmen einer Detektionswahrscheinlichkeit für die Erfassung eines Codierungsfehlers des Audiotestsignals (14) in dem betreffenden Spektralabschnitt aufgrund der jeweiligen Pegeldifferenz, wobei die Detektionswahrscheinlichkeit die Wahrscheinlichkeit simuliert, daß eine Pegeldifferenz zwischen einem Audioreferenzteilsignal und einem Audiotestteilsignal vom menschlichen Gehirn erfaßt wird.

**Claims**

**1.** A method of performing a hearing-adapted quality assessment of an audio test signal (14) derived from an audio reference signal (12) by coding and decoding, comprising the following steps:

breaking down the audio test signal (14) in accordance with its spectral composition into partial audio test signals (22) by means of a first bank of filters (20) consisting of filters (48) overlapping in frequency and defining spectral regions, said filters having differing filter functions which are each determined on the basis of the excitation curves of the human ear at the respective filter center frequency $f_m$, with an excitation curve of the human ear at a filter center frequency being dependent upon the sound pressure level of an audio signal supplied to the ear;

breaking down the audio reference signal (12) in accordance with its spectral composition into partial audio reference signals (18) by means of the first bank of filters (20) or by means of a second bank of filters (16) coinciding with the first bank of filters (20);

forming the level difference, by spectral regions, between the partial audio test signals (22) and the partial audio reference signals (18) belonging to the same spectral regions; and

determining, by spectral regions, a detection probability for detecting a coding error of the audio test signal (14) in the particular spectral region on the basis of the respective level difference, the detection probability simulating the probability that a level difference between a partial audio reference signal and a partial audio test signal is sensed by the human brain.

2.  The method of claim 1,
    wherein the excitation curve takes into consideration an external and middle ear transmission function and internal noise of the human ear.

3.  The method of claim 1 or 2,
    wherein the excitation curves of the filters (48) of the first and second banks of filters (16, 20) are determined in accordance with the center frequency of the filters in order to provide an approximation to the frequency resolution of the human ear that decreases in the direction towards high frequencies.

4.  The method of any of claims 1 to 3,
    wherein the excitation curves of the filters (48) of the first and second banks of filters (16, 20) are determined in accordance with the sound pressure level of the audio test signal and the audio reference signal (12), respectively, so as to have flatter filter edges and lower resting thresholds at higher sound pressure levels than at lower sound pressure levels.

5.  The method of any of claims 1 to 3,
    wherein the excitation curves of the filters (48) of the first and second banks of filters (16, 20) are determined in accordance with the sound pressure level of the audio test signal (14) and the audio reference signal (12), respectively, so that one filter function each is formed from minimum attenuation values of all filter functions possible in a sound pressure level range and corresponding to a specific sound pressure level.

6.  The method of any of claims 1 to 5,
    which prior to the step of forming the level difference by spectral regions comprises the steps of modelling, by spectral regions, the time masking of the audio test signal (14) and the audio reference signal (12).

7.  The method of claim 6,
    wherein the step of modelling, by spectral regions, the time masking comprises integration, by spectral regions, of an audio reference signal (12) or an audio test signal (14) in order to take into consideration pre-masking, as well as an exponential attenuation, by spectral regions, of the audio reference signal (12) or the audio test signal (14) in order to take into consideration post-masking.

8.  The method of any of claims 1 to 7,
    wherein the filters (48) of the first and second banks of filters (16, 20) have different sampling rates, the sampling rate being determined by the intersection of the filter edge located in terms of frequency above the center frequency ($f_m$) of a filter (48), with a predetermined filter attenuation.

9.  The method of claim 8, wherein the steps of breaking down the audio test signal and the audio reference signal comprises the following step:
    applying the audio test signal and die audio reference signal to a plurality of sub-banks of filters (42a-42b), obtained by grouping adjacent filters (48), wherein the filters in a sub-bank of filters (42a to 42f) have the same sampling rates, and wherein the sampling rates of the sub-banks of filters are different to each other and determined by the quotient of the original sampling rate, with which the audio test signal (14) and the audio reference signal (12) have been discretized, and a power of 2 associated with the respective sub-bank filter.

10. The method of any of claims 1 to 9,
    wherein prior to the step of forming the level difference by spectral regions, a delay between the audio reference signal (12) and the audio test signal (14) is determined and compensated.

11. The method of any of claims 1 to 10, wherein the step of determining the detection probability by spectral regions comprises the following partial steps:

allocating a detection probability of 0.5 to a specific threshold level difference;

allocating a detection probability which is smaller than 0.5 to a level difference that is smaller than the specific threshold level difference; and

allocating a detection probability which is greater than 0.5 to a level difference that is greater than the specific threshold level difference.

12. The method of any of claims 1 to 11, wherein the detection probabilities of adjacent spectral regions in a spectral range smaller than or equal to a psychoacoustic frequency group, are evaluated jointly thereby achieving a subjective sensation of the coding error of the audio test signal (14).

13. The method of any of claims 1 to 12, wherein several successive detection probabilities in time are combined to form a time slot, and the several successive detection probabilities in time are linked so as to obtain an overall detection probability for a time slot.

14. The method of any of claims 1 to 13, wherein short-time average values of the detection probabilities in a spectral region are formed, and a number of short-time average values of an audio test signal is stored, with an overall average value of all short-time average values together with the stored short-time average values yielding an overall acoustic impression of the respective spectral region of the audio test signal (14).

15. The method of any of claims 1 to 14,

wherein the audio test signal and the audio reference signal are stereo signals having a left-hand and a right-hand channel;

wherein the steps of breaking down the audio test signal and the audio reference signal comprise the separate breaking down of the left-hand channel and the right-hand channel of the signals by means of a non-linear element that emphasizes transients and reduces stationary signals, so as to produce a modified audio test signal having a left-hand channel and a right-hand channel as well as a modified audio reference signal having a left-hand channel and a right-hand channel; and

wherein the formation of the level difference by spectral regions comprises the formation of the level difference between the partial signals belonging to the same spectral regions, namely

the partial audio test signals of the left-hand channel and the partial audio reference signals of the left-hand channel,

the partial audio test signals of the right-hand channel and the partial audio reference signals of the right-hand channel,

the modified partial audio test signals of the left-hand channel and the modified partial audio reference signals of the left-hand channel, and

the modified partial audio test signals of the right-hand channel and the modified partial audio reference signals of the right-hand channel.

16. The method of claim 15,

wherein the greatest level difference is determined, by spectral regions, from the level differences of the signals for the left-hand channel and for the right-hand channel;

wherein the greatest level difference is determined, by spectral regions, from the level differences of the modified signals for the left-hand channel and for the right-hand channel; and

wherein the greatest level difference for the audio test signal and the greatest level difference for the modified audio test signal are combined via a weighted average value in order to detect the coding error of the stereophonic audio test signal.

**17.** The method of any of claims 1 to 16,
wherein the first and second banks of filters (16, 20) are constituted by one single bank of filters, and wherein, during breaking down of the audio test signal (14) or the audio reference signal (12), the partial audio reference signals and the partial audio test signals, respectively, are stored temporarily.

**18.** A device for performing a hearing-adapted quality assessment of an audio test signal (14) derived from an audio reference signal (12) by coding and decoding, comprising the following features:

a first bank of filters (16) for breaking down the audio test signal (14) in accordance with its spectral composition into partial audio test signals (22), said first bank of filters (16) including filters overlapping in frequency and defining spectral regions and having differing filter functions which are each determined on the basis of the excitation curves of the human ear at the respective filter center frequency, with an excitation curve of the human ear at a filter center frequency being dependent upon the sound pressure level of an audio signal supplied to the ear;

a second bank of filters (20) coinciding with the first bank of filters (16), for breaking down the audio reference signal (12) in accordance with its spectral composition into partial audio reference signals (18);

a calculating means for forming the level difference, by spectral regions, between the partial audio test signals (22) and the partial audio reference signals (18) belonging to the same spectral regions; and

an allocation means (52) for determining, by spectral regions, a detection probability for detecting a coding error of the audio test signal (14) in the particular spectral region on the basis of the respective level difference, the detection probability simulating the probability that a level difference between a partial audio referene signal and a partial audio test signal is sensed by the human brain.

**19.** The device of claim 18,
comprising furthermore a modelling means (24) for modelling, by spectral regions, the time masking of the audio test signal (14) and the audio reference signal (12).

**20.** The device of claim 19,
wherein the modelling means (24) comprises an integration means for integrating, by spectral regions, a partial audio reference signal or a partial audio test signal in order to take into consideration pre-masking, as well as an attenuation means for exponentially attenuating, by spectral regions, the partial audio reference signal or the partial audio test signal in order to take into consideration post-masking.

**21.** The device of any of claims 18 to 20,
comprising furthermore a plurality of group evaluation means (56) for commonly evaluating adjacent spectral regions for achieving a subjective sensation of the coding error of the audio test signal (14), with the number of adjacent, commonly evaluated spectral regions being selected such that a bandwidth formed by the commonly evaluated spectral regions is smaller than or equal to a psychoacoustic frequency group.

**22.** The device of any of claims 18 to 21,
comprising furthermore an overall evaluation means (54) for commonly evaluating all spectral regions in order to achieve an overall representation of the coding error of the audio test signal (14).

**23.** A device for performing a hearing-adapted quality assessment of an audio test signal (14) derived from an audio reference signal (12) by coding and decoding, comprising:

a bank of filters (16) for breaking down the audio test signal (14) in accordance with its spectral composition into partial audio test signals (22) and for breaking down the audio reference signal (12) in accordance with its spectral composition into partial audio reference signals (18), said bank of filters (16) including filters overlapping in frequency and defining spectral regions and having differing filter functions which are each determined on the basis of the excitation curves of the human ear at the respective filter center frequency, with an excitation curve of the human ear at a filter center frequency being dependent upon the sound pressure level of an audio signal supplied to the ear;

a memory for temporarily storing the spectral composition of the audio test signal (14) while the audio reference signal (12) is processed by the bank of filters (16), or for temporarily storing the spectral composition of the audio reference signal (12) while the audio test signal (14) is processed by the bank of filters (16);

a calculating device for forming the level difference, by spectral regions, between the partial audio test signals (22) and the partial audio reference signals (18) belonging to the same spectral regions; and

an allocation device (52) for determining, by spectral regions, a detection probability for detecting a coding error of the audio test signal (14) in the particular spectral region on the basis of the respective level difference, the detection probability simulating the probability that a level difference between a partial audio referene signal and a partial audio test signal is sensed by the human brain.

## Revendications

1. Procédé d'évaluation de la qualité adaptée à l'ouïe d'un signal audio (14) dérivé par codage et décodage d'un signal audio de référence (12), aux étapes suivantes consistant à :

   décomposer le signal audio de test (14) selon sa composition spectrale à l'aide d'une première banque de filtres (20) composée de filtres (48), se recouvrant quant à la fréquence et définissant des segments spectraux, à fonctions de filtré différentes l'une de l'autre déterminées, chacune, sur base des courbes d'excitation de l'ouïe humaine à la fréquence moyenne de filtre correspondante $f_m$, en signaux audio de test partiels (22), une courbe d'excitation de l'ouïe humaine étant, à une fréquence moyenne de filtre, fonction du niveau de sollicitation acoustique d'un signal audio amené à l'oreille ;
   décomposer le signal audio de référence (12) selon sa composition spectrale à l'aide de la première banque de filtres (20) ou d'une seconde banque de filtres (16) coïncidant avec la première banque de filtres (20), en signaux audio de référence partiels (18);
   former, par segment spectral, la différence de niveau entre les signaux audio de test partiels (22) et les signaux audio de référence partiels (18) appartenant aux mêmes segments spectraux ; et
   déterminer, par segment spectral, une probabilité de détection pour la détection d'une erreur de codage du signal audio de test dans le segment spectral concerné sur base de la différence de niveau correspondante, la probabilité de détection simulant la probabilité que soit détectée par le cerveau humain une différence de niveau entre un signal audio de référence partiel et un signal audio de test partiel.

2. Procédé suivant la revendication 1, dans lequel la courbe d'excitation tient compte d'une fonction de transmission de l'oreille externe et centrale et d'un bruit interne de l'oreille humaine.

3. Procédé suivant la revendication 1 ou 2, dans lequel les courbes d'excitation des filtres (48) de la première et de la seconde banque de filtres (16, 20) sont déterminées selon la fréquence moyenne des filtres, pour se rapprocher de la résolution de fréquence de l'ouïe humaine diminuant vers les hautes fréquences.

4. Procédé suivant l'une des revendications 1 à 3, dans lequel les courbes d'excitation des filtres (48) de la première et de la seconde banque de filtres (16, 20) sont déterminées selon le niveau de sollicitation acoustique du signal audio de test ou du signal audio de référence (12), afin de présenter, à des niveaux de sollicitation acoustique supérieurs, des flancs de filtre plus plats et des seuils d'ouïe de repos plus bas qu'à des niveaux de sollicitation acoustique inférieurs.

5. Procédé suivant l'une des revendications 1 à 3, dans lequel les courbes d'excitation des filtres (48) de la première et de la seconde banque de filtres (16, 20) sont déterminées selon le niveau de sollicitation acoustique du signal audio de test (14) ou du signal audio de référence (12), afin que chacune des fonctions de filtre soit formée de valeurs d'atténuation minimales de toutes les fonctions de filtre possibles dans une plage de niveaux de sollicitation acoustique et correspondant à un niveau de sollicitation acoustique déterminé.

**6.** Procédé suivant l'une des revendications 1 à 5, présentant, avant l'étape de formation, par segment spectral, de la différence de niveau, les étapes consistant à modeler, par segment spectral, le masquage dans le temps du signal audio de test (14) et du signal audio de référence (12).

**7.** Procédé suivant la revendication 6, dans lequel l'étape de modelage, par segment spectral, du masquage dans le temps présente l'intégration, par segment spectral, d'un signal audio de référence (12) ou d'un signal audio de test (14), afin de tenir compte du prémasquage, et l'atténuation exponentielle, par segment spectral, du signal audio de référence (12) ou signal audio de test (14), afin de tenir compte du post-masquage.

**8.** Procédé suivant l'une des revendications 1 à 7, dans lequel les filtres (48) de la première et de la seconde banque de filtres (16, 20) présentent des vitesses de balayage différentes, la vitesse de balayage étant déterminée par l'interface entre le flanc de filtre disposé, quant à la fréquence, au-dessus de la fréquence moyenne $f_m$ d'un filtre (48) et une atténuation de filtre prédéterminée.

**9.** Procédé suivant la revendication 8, dans lequel les étapes de décomposition du signal audio de test et du signal audio de référence présentent l'étape suivante :

alimenter le signal audio de test et le signal audio de référence vers une pluralité de sous-banques de filtres (42a à 42f) obtenues par le regroupement de filtres (48) adjacents, les filtres dans une sous-banque de filtres ayant les mêmes vitesses de balayage et les vitesses de balayage des sous-banques de filtres étant différentes l'une de l'autre et étant déterminées par les quotients de la vitesse de balayage originale par laquelle le signal audio de test (14) et le signal audio de référence (12) ont été rendus discrets, et une puissance de 2 associée à chaque sous-banque de filtres.

**10.** Procédé suivant l'une des revendications 1 à 9, dans lequel, avant l'étape de formation, par segment spectral, de la différence de niveau, est déterminée et compensée une temporisation entre le signal audio de référence (12) et le signal audio de test (14).

**11.** Procédé suivant l'une des revendications 1 à 10, dans lequel l'étape de détermination, par segment spectral, d'une probabilité de détection présente les étapes partielles suivantes consistant à :

attribuer une probabilité de détection de 0,5 à une différence de niveau de seuil déterminée ;
attribuer une probabilité de détection inférieure à 0,5 à une différence de niveau inférieure à la différence de niveau de seuil déterminée ; et
attribuer une probabilité de détection supérieure à 0,5 à une différence de niveau supérieure à la différence de niveau de seuil déterminée.

**12.** Procédé suivant l'une des revendications 1 à 11, dans lequel les probabilités de détection de segments spectraux adjacents dans une plage spectrale inférieure ou égale à un groupe de fréquences psychoacoustique sont évaluées ensemble, d'où il est obtenu une sensation subjective de l'erreur de codage du signal audio de test (14).

**13.** Procédé suivant l'une des revendications 1 à 12, dans lequel plusieurs probabilités de détection successives dans le temps sont regroupées en un intervalle de temps et les plusieurs probabilités de détection successives dans le temps sont réunies, pour obtenir une probabilité de détection totale pour un intervalle de temps.

**14.** Procédé suivant l'une des revendications 1 à 13, dans lequel il est formé des valeurs moyennes de courte durée des probabilités de détection dans un segment spectral et il est mémorisé un nombre de valeurs moyennes de courte durée d'un signal audio de test, une valeur moyenne d'ensemble de toutes les valeurs moyennes de courte durée donnant, ensemble avec les valeurs moyennes de courte durée mémorisées, une impression auditive d'ensemble du segment spectral concerné du signal audio de test (14).

**15.** Procédé suivant l'une des revendications 1 à 14, dans lequel le signal audio de test et le signal audio de référence sont des signaux stéréo avec un canal gauche et un canal droit ;

dans lequel les étapes de décomposition du signal audio de test et du signal audio de référence présentent la décomposition séparée du canal gauche et du canal droit des signaux à l'aide d'un élément non-linéaire mettant en évidence les transitoires et réduisant les signaux stationnaires, pour générer un signal audio de test modifié avec un canal gauche et un canal droit et un signal audio de référence modifié avec un canal gauche et un canal droit ; et

dans lequel la formation, par segment spectral, de la différence de niveau présente la formation de la différence de niveau entre

les signaux audio de test partiels du canal gauche et les signaux audio de référence partiels du canal gauche,

les signaux audio de test partiels du canal droit et les signaux audio de référence partiels du canal droit,

les signaux audio de test partiels modifiés du canal gauche et les signaux audio de référence partiels modifiés du canal gauche, et

les signaux audio de test partiels modifiés du canal droit et les signaux audio de référence partiels modifiés du canal droit

appartenant aux mêmes segments spectraux.

16. Procédé suivant la revendication 15, dans lequel est déterminée par segment spectral, à partir des différences de niveau des signaux, la différence de niveau la plus grande pour le canal gauche et pour le canal droit ;

dans lequel est déterminée par segment spectral, à partir des différences de niveau des signaux modifiés, la différence de niveau la plus grande pour le canal gauche et pour le canal droit ; et

dans lequel la différence de niveau la plus grande pour le signal audio de test et la différence de niveau la plus grande pour le signal audio de test modifié sont unies par une valeur moyenne pondérée, pour détecter l'erreur de codage du signal audio de test stéréo.

17. Procédé suivant l'une des revendications 1 à 16, dans lequel la première et la seconde banque de filtre (16, 20) sont une seule banque de filtres, les signaux audio de référence partiels ou les signaux audio de test partiels étant mémorisés de manière intermédiaire pendant la décomposition du signal audio de test (14) ou du signal audio de référence (12).

18. Dispositif d'évaluation de la qualité adaptée à l'ouïe d'un signal audio (14) dérivé par codage et décodage d'un signal audio de référence (12), aux caractéristiques suivantes :

une première banque de filtres (16) destinée à décomposer le signal audio de test (14) selon sa composition spectrale en signaux audio de test partiels (22), la première banque de filtres (16) présentant des filtres, se recouvrant quant à la fréquence et définissant des segments spectraux, à fonctions de filtre différentes l'une de l'autre déterminées, chacune, sur base des courbes d'excitation de l'ouïe humaine à la fréquence moyenne de filtre correspondante, une courbe d'excitation de l'ouïe humaine étant, à une fréquence moyenne de filtre, fonction du niveau de sollicitation acoustique d'un signal audio amené à l'oreille ;

une seconde banque de filtres (20) coïncidant avec la première banque de filtres (16), destinée à décomposer le signal audio de référence (12) selon sa composition spectrale en signaux audio de référence partiels (18) ;

un dispositif de calcul destiné à former, par segment spectral, la différence de niveau entre les signaux audio de test partiels (22) et les signaux audio de référence partiels (18) appartenant aux mêmes segments spectraux ; et

un dispositif d'attribution (52) destiné à déterminer, par segment spectral, une probabilité de détection pour la détection d'une erreur de codage du signal audio de test (14) dans le segment spectral concerné sur base de la différence de niveau correspondante, la probabilité de détection simulant la probabilité que soit détectée par le cerveau humain une différence de niveau entre un signal audio de référence partiel et un signal audio de test partiel.

19. Dispositif suivant la revendication 18, présentant, par ailleurs, un dispositif de modelage (24) destiné à modeler, par segment spectral, le masquage dans le temps du signal audio de test (14) et du signal audio de référence (12).

20. Dispositif suivant la revendication 19, dans lequel le dispositif de modelage (24) présente un dispositif d'intégration destiné à intégrer, par segment spectral, un signal audio partiel de référence ou un signal audio partiel de test, afin de tenir compte du prémasquage, et un dispositif d'atténuation destiné à atténuer de manière exponentielle, par segment spectral, le signal audio partiel de référence ou le signal audio partiel de test, afin de tenir compte du post-masquage.

21. Dispositif suivant l'une des revendications 18 à 20, présentant, par ailleurs, une pluralité de dispositifs d'évaluation de groupe (56) destinés à évaluer ensemble des segments spectraux adjacents, pour obtenir une sensation subjective de l'erreur de codage du signal audio de test (14), le nombre de segments spectraux adjacents évalués ensemble étant choisi de telle sorte qu'une largeur de bande formée par les segments spectraux évalués ensemble soit inférieure ou égale à un groupe de fréquences psychoacoustique.

**22.** Dispositif suivant l'une des revendications 18 à 21, présentant, par ailleurs, un dispositif d'évaluation globale (54) destiné à évaluer ensemble tous les segments spectraux, afin d'obtenir une représentation globale de l'erreur de codage du signal audio de test (14).

**23.** Dispositif d'évaluation de la qualité adaptée à l'ouïe d'un signal audio (14) dérivé par codage et décodage d'un signal audio de référence (12), aux caractéristiques suivantes :

une banque de filtres (16) destinée à décomposer le signal audio de test (14) selon sa composition spectrale en signaux audio de test partiels (22) et à décomposer le signal audio de référence (12) selon sa composition spectrale en signaux audio de référence partiels (18), la banque de filtres (16) présentant des filtres, se recouvrant quant à la fréquence et définissant des segments spectraux, à fonctions de filtre différentes l'une de l'autre déterminées, chacune, sur base des courbes d'excitation de l'ouïe humaine à la fréquence moyenne de filtre correspondante, une courbe d'excitation de l'ouïe humaine étant, à une fréquence moyenne de filtre, fonction du niveau de sollicitation acoustique d'un signal audio amené à l'oreille ;

un dispositif de mémoire intermédiaire destiné à mémoriser de manière intermédiaire la composition spectrale du signal audio de test (14) ou du signal audio de référence pendant le traitement du signal audio de référence (12) ou du signal audio de test (14) par la banque de filtres (16) ;

un dispositif de calcul destiné à former, par segment spectral, la différence de niveau entre les signaux audio de test partiels (22) et les signaux audio de référence partiels (18) appartenant aux mêmes segments spectraux ; et

un dispositif d'attribution (52) destiné à déterminer, par segment spectral, une probabilité de détection pour la détection d'une erreur de codage du signal audio de test (14) dans le segment spectral concerné sur base de la différence de niveau correspondante, la probabilité de détection simulant la probabilité que soit détectée par le cerveau humain une différence de niveau entre un signal audio de référence partiel et un signal audio de test partiel.

## FIG.1

## FIG.2

## FIG.3

**FIG.4**

**FIG.5**

**FIG.6**

**FIG.7**

**FIG.8**

**FIG.9**

**FIG.10**

## LOKALE DETEKTION

*FIG.11*

## GRUPPENDETEKTION

*FIG.12*